# EUROPEAN PATENT APPLICATION

(11) **EP 4 361 708 A1**
(43) Date of publication of application: **01.05.2024**
(21) Application number: 22828403.0
(22) Date of filing: 21.06.2022
(51) Int. Cl.: G02C 7/04, C08F 290/06, C08G 77/20, C08G 77/38, C08G 81/02, C09D 133/02, C09D 133/14

(54) **CONTACT LENS AND PRODUCTION METHOD FOR SAID LENS**

(30) Priority: 24.06.2021 JP 2021104496
(71) Applicant: NOF Corporation, Shibuya-ku Tokyo 150-6019 (JP)
(72) Inventor: TANAKA Yoshiki, Kawasaki-shi, Kanagawa 210-0865 (JP); KAWASAKI Hiroko, Kawasaki-shi, Kanagawa 210-0865 (JP); GOTANDA Ryuya, Kawasaki-shi, Kanagawa 210-0865 (JP); IWAKIRI Norio, Kawasaki-shi, Kanagawa 210-0865 (JP)
(74) Representative: Mewburn Ellis LLP
(86) International application number: PCT/JP2022/024636
(87) International publication number: WO 2022/270486

(57) **Abstract**

Provided are a contact lens having hydrophilicity, lubricity, and anti-lipid adhesion property, and a method of producing the lens. It has been found that the above-mentioned object can be achieved by a contact lens in which a hydrophilic polymer and a contact lens base material are combined with each other and the contact lens base material including an epoxy group-containing silicone macromer is surface-treated with the hydrophilic polymer.

## Description

### Technical Field

The present disclosure relates to a contact lens including a hydrophilic polymer and a contact lens base material that is an epoxy group-containing silicone macromer, and a method of producing the lens. More specifically, the present disclosure relates to a contact lens in which a contact lens base material including an epoxy group-containing silicone macromer in a composition thereof is surface-treated with a hydrophilic polymer, and a production method therefor.

The present application claims priority from Japanese Patent Application No. 2021-104496, which is incorporated herein by reference.

### Background Art

A silicone hydrogel contact lens has significantly high oxygen permeability as compared to a related-art hydrogel lens because silicone is blended therein. Thus, the silicone hydrogel contact lens has increased its share in the contact lens market in recent years, and is conceived to become increasingly widespread in the future. However, the silicone hydrogel contact lens is originally made of a highly hydrophobic material, and is hence liable to repel a tear liquid and cause lipid dirt to adhere thereto. Accordingly, the silicone hydrogel contact lens is generally required to be improved in hydrophilicity, lubricity, and lipid adhesion property through surface modification.

Various measures have been taken for the surface modification. For example, plasma treatment is included in each of production processes for some commercially available silicone hydrogel contact lenses. The advantage of the plasma treatment lies in relatively high hydrophilicity and its durability. Meanwhile, lubricity may be decreased.

As a measure that does not require high capital investment, there is given the addition of a wetting agent to a lens formulation. The advantage of this measure lies in that the wetting agent is added before a contact lens is molded, to thereby eliminate a surface treatment step after molding. Meanwhile, transparency may be impaired through use of the wetting agent in combination with a silicone component in the lens formulation.

As another measure, there is given coating of the surface of a contact lens with a wetting agent. A hydrophilic polymer is often used as the wetting agent, and it is known that both high hydrophilicity and lubricity are obtained particularly in the case of using 2-methacryloyloxyethyl phosphorylcholine {2-(methacryloyloxy)ethyl-2'-(trimethylammonio)ethyl phosphate, hereinafter sometimes abbreviated as "MFC"} having a zwitterionic structure.

In Patent Literature 1, investigations have been made on the synthesis of a MPC copolymer. However, the use of the copolymer described as an example for coating of a silicone hydrogel contact lens has not been investigated.

In Patent Literature 2, coating of a silicone hydrogel contact lens with a MPC copolymer has been investigated. However, the coating is not immobilized onto the contact lens via a covalent bond, and there are concerns about durability. Accordingly, there is room for improvement in a coating method.

In each of Patent Literature 3 and Patent Literature 4, investigations have been made on immobilizing a hydrophilic polymer onto the surface of a silicone hydrogel contact lens via a covalent bond. However, there is room for improvement in the hydrophilicity, lubricity, and anti-lipid adhesion property of the surface.

In addition, in recent years, there has been reported Lid-wiper epitheliopathy (LWE) in which epithelial shedding and degeneration in a surface layer of a palpebral conjunctival margin are considered to occur due to an increase in friction between the palpebral conjunctival margin and an ocular surface caused by eye blinking motion (Non Patent Literature 1, Non Patent Literature 2).

LWE caused by the friction between the palpebral conjunctival margin and the ocular surface is attracting attention as an eye disease. Accordingly, there is a demand for a contact lens having high surface hydrophilicity and lubricity.

### Citation List

### Patent Literature

[PTL 1] US 6090901 A
[PTL 2] WO 2013/074535 A1
[PTL 3] US 6087415 A
[PTL 4] WO 2001/074932 A1

### Non Patent Literature

[NPL 1] D.R. Korb et al., 2002, CLAO J, 28, 211-216.
[NPL 2] D.R. Korb et al., 2005, Eye & Contact Lens, 31, 2-8.

### Summary of Invention

### Technical Problem

An object of the present disclosure is to provide a contact lens having hydrophilicity, lubricity, and an anti-lipid adhesion property and a method of producing the lens.

### Solution to Problem

The inventors have made extensive investigations in order to achieve the above-mentioned object. As a result, the inventors have found that the above-mentioned object can be achieved by a contact lens in which a hydrophilic polymer containing a specific composition and a contact lens base material containing a specific composition are combined with each other, and the contact lens base material including an epoxy group-containing silicone macromer in a composition thereof is surface-treated with the hydrophilic polymer. Thus, the inventors have completed a contact lens of the present disclosure.

Specifically, the contact lens of the present disclosure is as described below.
1. A contact lens, including: a hydrophilic polymer; and a contact lens base material, wherein the hydrophilic polymer is a polymer containing a constituent monomer based on at least one kind of 2-aminoethyl methacrylate or methacrylic acid, wherein the contact lens base material is a base material including an epoxy group-containing silicone macromer represented by the following formula (1) in a composition thereof, and wherein the hydrophilic polymer and the contact lens base material are bonded to each other via at least one covalent bond selected from the group consisting of the following formulae (A-1) to (B-2): 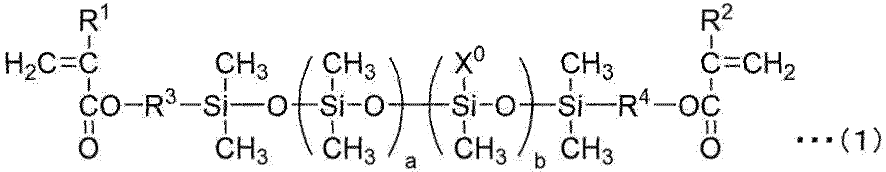
   where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 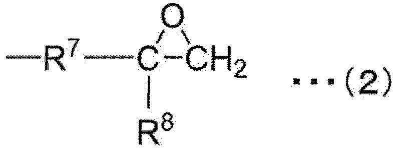
   where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 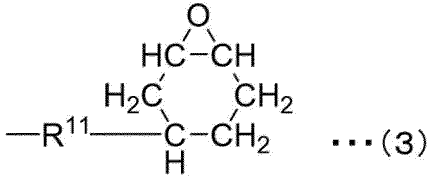
   where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms. 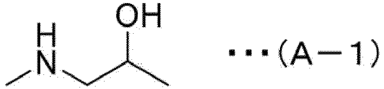 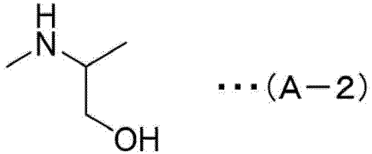 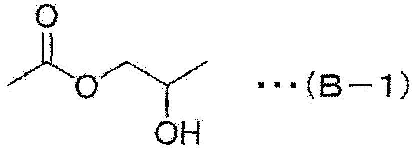 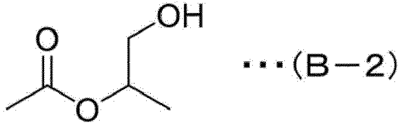
2. A method of producing a contact lens, including a step of bringing a hydrophilic polymer and a contact lens base material into contact with each other, wherein the hydrophilic polymer is a polymer containing a constituent monomer based on at least one kind of 2-aminoethyl methacrylate or methacrylic acid, wherein the contact lens base material is a base material including an epoxy group-containing silicone macromer represented by the following formula (1) in a composition thereof, and wherein at least one covalent bond selected from the group consisting of the following formulae (A-1) to (B-2) is formed in the step: 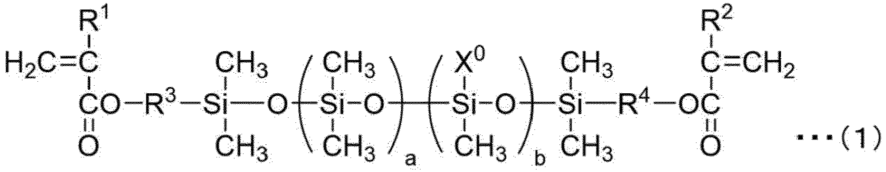
   where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 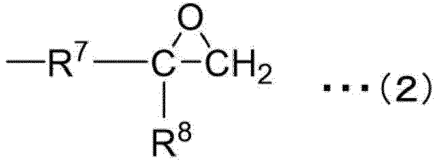
   where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 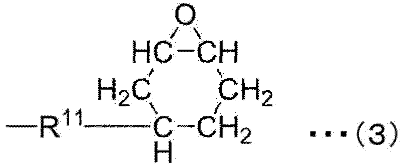
   where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms. 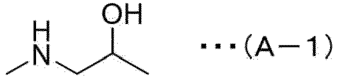 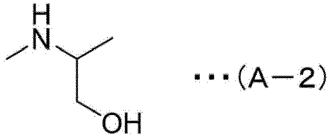 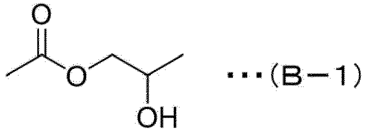 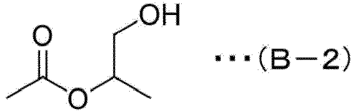
3. The contact lens according to the above-mentioned item 1, wherein the hydrophilic polymer is a copolymer further containing a constituent monomer based on a monomer represented by the following formula (4): 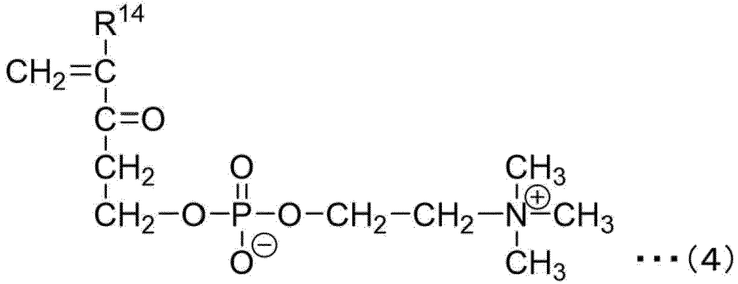 where R¹⁴ represents a hydrogen atom or a methyl group.
4. The method of producing a contact lens according to the above-mentioned item 2, wherein the hydrophilic polymer is a copolymer further containing a constituent monomer based on a monomer represented by the following formula (4): 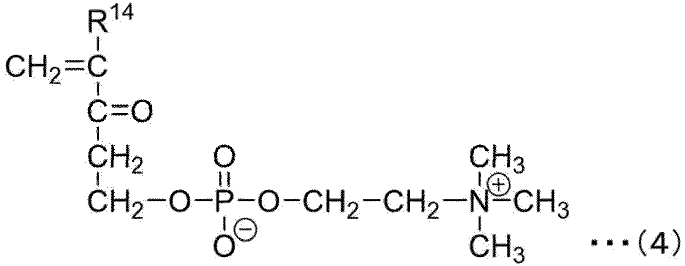 where R¹⁴ represents a hydrogen atom or a methyl group.
5. A method of using a polymer containing a constituent monomer based on at least one kind of 2-aminoethyl methacrylate or methacrylic acid and an epoxy group-containing silicone macromer represented by the following formula (1) for production of a contact lens: 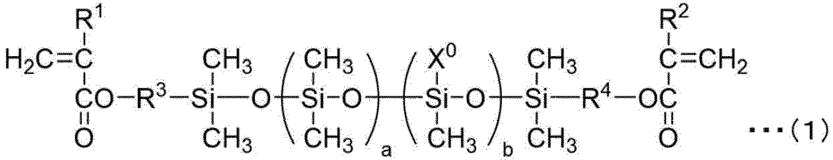
   where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 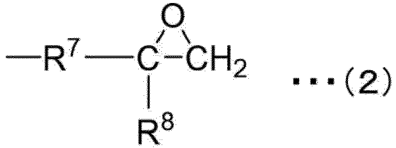
   where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 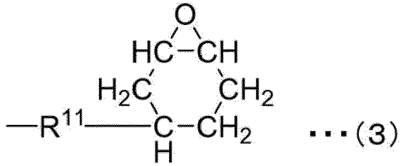
   where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms,
   wherein the contact lens includes the hydrophilic polymer and a contact lens base material including the epoxy group-containing silicone macromer represented by the formula (1) in a composition thereof, and
   wherein the hydrophilic polymer and the contact lens base material are bonded to each other via at least one covalent bond selected from the group consisting of the following formulae (A-1) to (B-2). 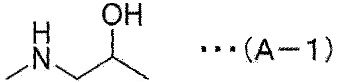 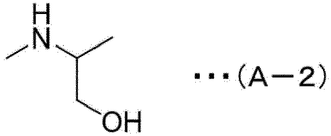 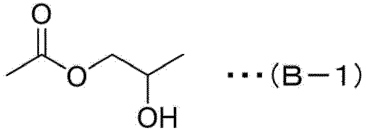 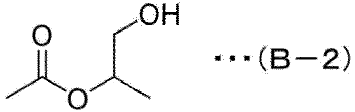
6. The contact lens according to the above-mentioned item 1 or 3, wherein the hydrophilic polymer is a polymer containing a constituent monomer based on 2-aminoethyl methacrylate, and the epoxy group-containing silicone macromer represented by the formula (1) is a macromer in which, in the formula (1), "a" represents an integer of from 30 to 280, "b" represents an integer of from 1 to 70, R¹ represents -CH₃, R² represents -CH₃, R³ represents -CH₂CH₂CH₂-, R⁴ represents -CH₂CH₂CH₂-, and X° is represented by the formula (2) {where R⁷ represents -CH₂CH₂CH₂-O-CH₂-, and R⁸ represents -H}.
7. The contact lens according to the above-mentioned item 1 or 3, wherein the hydrophilic polymer is a polymer containing a constituent monomer based on methacrylic acid, and the epoxy group-containing silicone macromer represented by the formula (1) is a macromer in which, in the formula (1), "a" represents an integer of from 30 to 280, "b" represents an integer of from 1 to 70, R¹ represents -CH₃, R² represents -CH₃, R³ represents - CH₂CH₂CH₂-, R⁴ represents -CH₂CH₂CH₂-, and X° is represented by the formula (2) {where R⁷ represents -CH₂CH₂CH₂-O-CH₂-, and R⁸ represents -H}.
8. A contact lens base material, including an epoxy group-containing silicone macromer represented by the following formula (1) in a composition thereof: 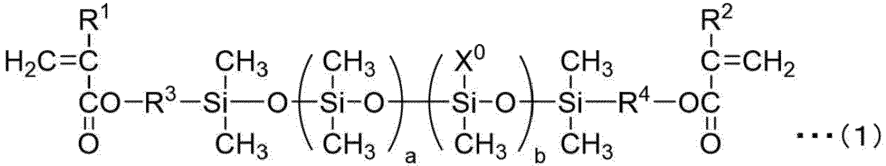
   where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 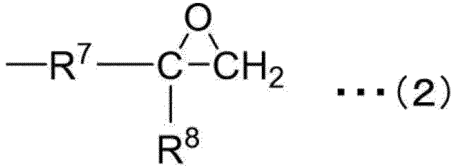
   where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 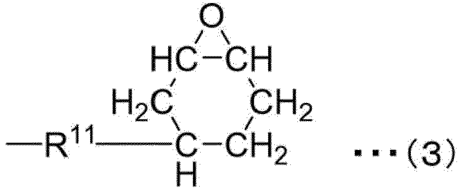
   where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms.

### Advantageous Effects of Invention

The contact lens of the present disclosure has hydrophilicity, lubricity, and an anti-lipid adhesion property.

### Description of Embodiments

A contact lens of the present disclosure includes: a hydrophilic polymer that is a polymer containing a constituent monomer based on at least one kind of 2-aminoethyl methacrylate or methacrylic acid; and a contact lens base material including an epoxy group-containing silicone macromer in a composition thereof, wherein the hydrophilic polymer and the contact lens base material are bonded to each other via a covalent bond.

In a method of producing a contact lens of the present disclosure, a hydrophilic polymer and a contact lens base material are immobilized onto each other via a covalent bond. More specifically, a covalent bond is formed between a constituent monomer based on at least one kind of 2-aminoethyl methacrylate or methacrylic acid contained in the hydrophilic polymer and an epoxy group of an epoxy group-containing silicone macromer included in the contact lens base material. In this case, the hydrophilic polymer is immobilized onto the silicone macromer. Because of the immobilization, the hydrophilic polymer is immobilized onto a silicone moiety to which lipid is liable to adhere in a silicone contact lens, and thus a suppressing effect on the adhesion of lipid becomes excellent.

In the contact lens and the method of producing the lens of the present disclosure, it is not required that the covalent bond between the hydrophilic polymer and the contact lens base material be formed at all reactive sites. That is, in the contact lens and the method of producing the lens of the present disclosure, part of 2-aminoethyl methacrylate or methacrylic acid may remain unreacted, part of the epoxy group-containing silicone macromer may remain unreacted, or further, part of an epoxy group of the epoxy group-containing silicone macromer may remain in an unreacted state in the contact lens.

### <With Regard to Hydrophilic Polymer>

The hydrophilic polymer of the present disclosure is a polymer containing a constituent monomer based on at least one kind of 2-aminoethyl methacrylate or methacrylic acid.

The constituent monomer means a unit of a compound contained in the polymer based on each monomer or derived from each monomer.

Specifically, the hydrophilic polymer may be a polymer containing a constituent monomer based on 2-aminoethyl methacrylate or methacrylic acid alone or a copolymer containing those constituent monomers in a mixed manner. The constituent monomer based on at least one kind of 2-aminoethyl methacrylate or methacrylic acid (hereinafter sometimes abbreviated as "reactive monomer") forms a covalent bond with the contact lens base material.

As used herein, the term "2-aminoethyl methacrylate" also encompasses a hydrochloric acid adduct structure thereof. That is, a 2-aminoethyl methacrylate hydrochloride is encompassed by 2-aminoethyl methacrylate.

In addition, as used herein, the term "methacrylic acid" encompasses a metal salt structure thereof. That is, a methacrylic acid metal salt is encompassed by methacrylic acid. For example, sodium methacrylate and potassium methacrylate are also encompassed by methacrylic acid.

The hydrophilic polymer of the present disclosure may further contain a constituent unit based on a monomer represented by the following formula (4) (hereinafter sometimes abbreviated as "PC monomer"). The PC monomer in the hydrophilic polymer is introduced in order to enhance the hydrophilicity, lubricity, and anti-lipid adhesion property of the surface of the contact lens.

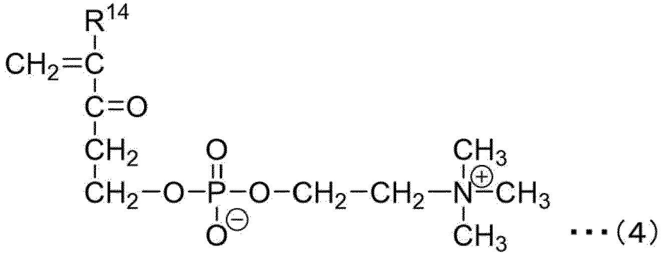

In the formula, R¹⁴ represents a hydrogen atom or a methyl group.

The PC monomer in the hydrophilic polymer is preferably MPC in which R¹⁴ in the formula (4) represents a methyl group from the viewpoint of availability.

The hydrophilic polymer of the present disclosure may contain any other monomer than the reactive monomer and the PC monomer to such an extent that the effects of the contact lens of the present disclosure are not impaired.

An example of the other monomer is a polymerizable monomer selected from a linear or branched alkyl (meth) acrylate, a cyclic alkyl (meth)acrylate, an aromatic group-containing (meth)acrylate, a styrene-based monomer, a vinyl ether monomer, a vinyl ester monomer, a hydrophilic hydroxy group-containing (meth)acrylate, and a nitrogen-containing group-containing monomer.

As used herein, the term "alkyl (meth)acrylate" means "alkyl acrylate or alkyl methacrylate," and the same applies to other similar terms.

Examples of the linear or branched alkyl (meth)acrylate include methyl (meth)acrylate, ethyl (meth)acrylate, propyl (meth)acrylate, butyl (meth)acrylate, lauryl (meth)acrylate, and stearyl (meth)acrylate.

An example of the cyclic alkyl (meth)acrylate is cyclohexyl (meth)acrylate.

Examples of the aromatic group-containing (meth)acrylate include benzyl (meth)acrylate and phenoxyethyl (meth)acrylate.

Examples of the styrene-based monomer include styrene, methylstyrene, and chlorostyrene.

Examples of the vinyl ether monomer include methyl vinyl ether and butyl vinyl ether.

Examples of the vinyl ester monomer include vinyl acetate and vinyl propionate.

Examples of the hydrophilic hydroxy group-containing (meth)acrylate include polyethylene glycol (meth)acrylate, polypropylene glycol (meth)acrylate, 2-hydroxyethyl (meth)acrylate, 2-hydroxybutyl (meth)acrylate, and 4-hydroxybutyl (meth)acrylate.

Examples of the nitrogen-containing group-containing monomer include N-vinylpyrrolidone, N-vinylacetamide, and N-vinyl-N-methylacetamide.

In the case where the hydrophilic polymer is a copolymer formed only of the reactive monomer and the PC monomer, when the molar ratio of the reactive monomer and the molar ratio of the PC monomer in the hydrophilic polymer are represented by n_{A} and n_{B}, respectively, the molar ratio n_{A}:n_{B} between the constituent monomers is 5 to 80:20 to 95. Alternatively, when the n_{A} is defined as 100, the n_{B} is from 25 to 1,900.

When the molar ratio n_{A} of the reactive monomer is less than the above-mentioned range, a bond with the contact lens base material may not be sufficiently formed. When the molar ratio n_{B} of the PC monomer is less than the above-mentioned range, sufficient hydrophilicity, sufficient lubricity, and a sufficient anti-lipid adhesion property may not be imparted to the contact lens.

In the case where the hydrophilic polymer is a copolymer formed of the reactive monomer, the PC monomer, and the other monomer, when the molar ratio of the reactive monomer, the molar ratio of the PC monomer, and the molar ratio of the other monomer in the hydrophilic polymer are represented by m_{A}, m_{B}, and me, respectively, the molar ratio m_{A}:m_{B}:m_{C} among the constituent monomers is preferably 4 to 80:19 to 95:1 to 50. Alternatively, when the m_{A} is defined as 100, the m_{B} is from 23.75 to 2,375, and the m_{C} is from 1.25 to 1,250.

When the molar ratio m_{A} of the reactive monomer is less than the above-mentioned range, a bond with the contact lens base material may not be sufficiently formed. When the molar ratio m_{B} of the PC monomer is less than the above-mentioned range, sufficient hydrophilicity, sufficient lubricity, and a sufficient anti-lipid adhesion property may not be imparted to the contact lens.

The weight-average molecular weight of the hydrophilic polymer is from 10,000 to 5,000,000, preferably from 12,000 to 4,000,000, more preferably from 14,000 to 3,000,000, still more preferably from 16,000 to 2,000,000.

When the weight-average molecular weight is less than 10,000, it may become difficult to separate the hydrophilic polymer from impurities at the time of production. When the weight-average molecular weight is more than 5,000,000, the viscosity of the hydrophilic polymer may be increased to make filtration difficult.

The weight-average molecular weight of the hydrophilic polymer refers to a value determined by gel permeation chromatography (GPC) measurement.

The hydrophilic polymer may be obtained by subjecting a reactive monomer composition of the hydrophilic polymer to radical polymerization. The hydrophilic polymer may be produced, for example, by subjecting the reactive monomer composition of the hydrophilic polymer to radical polymerization in the presence of a radical polymerization initiator under purging with an inert gas, such as nitrogen, carbon dioxide, argon, or helium, or under an atmosphere of the inert gas. A polymerization method to be performed may be a known method, such as bulk polymerization, suspension polymerization, emulsion polymerization, or solution polymerization. The polymerization method is preferably solution polymerization from the viewpoint of, for example, purification. The hydrophilic polymer may be purified by a known purification method, such as a reprecipitation method, a dialysis method, or an ultrafiltration method.

Examples of the radical polymerization initiator may include an azo-based radical polymerization initiator, an organic peroxide, and a persulfate.

Examples of the azo-based radical polymerization initiator include 2,2'-azobis(2-methylpropionamidine) dihydrochloride, 2,2-azobis(2-diaminopropyl) dihydrochloride, 2,2-azobis(2-(5-methyl-2-imidazolin-2-yl)propane) dihydrochloride, 4,4-azobis(4-cyanovaleric acid), 2,2-azobisisobutylamide dihydrate, 2,2-azobis(2,4-dimethylvaleronitrile), and 2,2-azobisisobutyronitrile (AIBN).

Examples of the organic peroxide include t-butyl peroxyneodecanoate (PERBUTYL (Registered trademark) ND), benzoyl peroxide, diisopropyl peroxydicarbonate, t-butyl peroxy-2-ethylhexanoate, t-butyl peroxypivalate, t-butyl peroxydiisobutyrate, lauroyl peroxide, and succinic acid peroxide (=succinyl peroxide).

Examples of the persulfate include ammonium persulfate, potassium persulfate, and sodium persulfate.

Those radical polymerization initiators may be used alone or as a mixture thereof. A usage amount of the polymerization initiator is usually from 0.001 part by mass to 10 parts by mass, preferably from 0.01 part by mass to 5.0 parts by mass with respect to 100 parts by mass of the monomer composition of the hydrophilic polymer.

The production of the hydrophilic polymer of the present disclosure may be performed in the presence of a solvent. Any solvent may be used as the solvent as long as the solvent dissolves the reactive monomer composition of the hydrophilic polymer, and examples thereof include water, an alcohol-based solvent, a ketone-based solvent, an ester-based solvent, a linear or cyclic ether-based solvent, and a nitrogen-containing solvent.

Examples of the alcohol-based solvent include methanol, ethanol, n-propanol, and isopropanol.

Examples of the ketone-based solvent include acetone, methyl ethyl ketone, and diethyl ketone.

An example of the ester-based solvent is ethyl acetate.

Examples of the linear or cyclic ether-based solvent include ethyl cellosolve and tetrahydrofuran.

Examples of the nitrogen-containing solvent include acetonitrile, nitromethane, and N-methyl pyrrolidone.

### <With Regard to Epoxy Group-containing Silicone Macromer>

In the contact lens and the method of producing the lens of the present disclosure, the contact lens includes the hydrophilic polymer described above and the contact lens base material.

The epoxy group-containing silicone macromer included in a composition (configuration) of the contact lens base material of the present disclosure is represented by the following formula (1) : 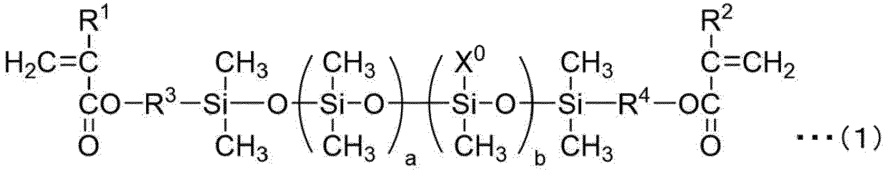
where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 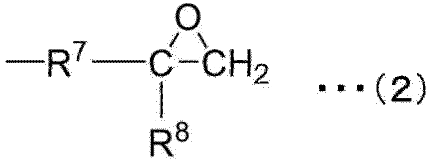
where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 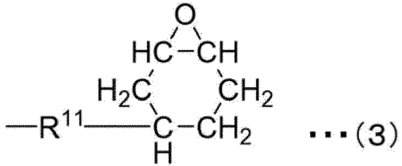
where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms.

"a" and "b" are not particularly limited as long as "a" and "b" fall within the above-mentioned ranges. "a" represents an integer of from 10 to 500, preferably from 10 to 300, more preferably from 10 to 200, still more preferably from 15 to 100, particularly preferably from 20 to 70, most preferably from 20 to 50.

"b" represents an integer of from 1 to 100, preferably from 1 to 70, more preferably from 2 to 30, still more preferably from 2 to 15, particularly preferably from 3 to 10.

When "a" is less than the above-mentioned ranges, the contact lens may become hard and brittle. When "a" is more than the above-mentioned ranges, the synthesis of the contact lens base material may be difficult from the viewpoint of compatibility.

When "b" is less than the above-mentioned ranges, the hydrophilic polymer may not be sufficiently immobilized onto the contact lens base material. When "b" is more than the above-mentioned range, dynamic characteristics suitable for the contact lens may be impaired.

In addition, the ranges (e.g., preferred ranges and more preferred ranges) of "a" and "b" may also be combined or changed. For example, the more preferred range may be selected for "a", and the particularly preferred range may be selected for "b".

As used herein, the term "alkylene having 2 to 6 carbon atoms" refers to a divalent group obtained by removing two hydrogen atoms from alkyl having 2 to 6 carbon atoms. The same applies to other similar terms. An alkylene group (or radical) forms two bonds with other groups in an organic compound.

The epoxy group-containing silicone macromer represented by the formula (1) is synthesized by the following process including two steps.

In the first step, an epoxy group-containing silicone macromer precursor represented by the following formula (5) is synthesized in accordance with any method known to a person skilled in the art (see: JP 5490547 B2, JP 62-29776 B2). For example, the epoxy group-containing silicone macromer precursor of the formula (5) is synthesized from polymerization of a mixture of octamethyltetracyclosiloxane (D4) and 1,3,5,7-tetramethylcyclotetrasiloxane (D'4), for example, through a reaction with an acid catalyst such as trifluoromethanesulfonic acid in the presence of 1,3-bis[3-(meth)acryloxypropyl]tetramethyldisiloxane serving as an end block. Through control of the molar ratios of the end block, D4, and D'4, "a" and "b" in the formula (5) can be obtained as desired values.

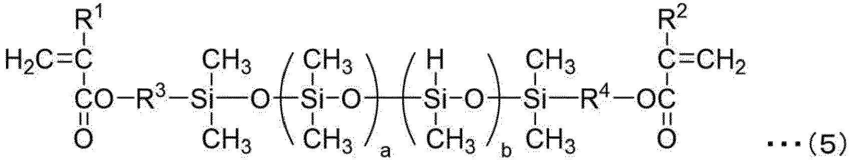

In the formula, "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms.

In the second step, the epoxy group-containing silicone macromer precursor represented by the formula (5) is caused to react with an ene monomer having an epoxy group in a platinum-catalyzed hydrosilylation reaction known to a person skilled in the art to synthesize an epoxy group-containing silicone macromer represented by the formula (1) containing one organic substituent having an epoxy group.

The ene monomer having an epoxy group is a compound having a vinyl group and an epoxy group in a molecule thereof, and examples thereof may include 2-methyl-2-vinyloxirane, 3,4-epoxy-1-butene, 1,2-epoxy-5-hexene, allyl glycidyl ether, 1,2-epoxy-9-decene, and 1,2-epoxy-4-vinylcyclohexane (corresponding to the formula (3)). Those compounds are commercially available.

### <Contact Lens Base Material>

The contact lens base material of the present disclosure is a base material including the above-mentioned epoxy group-containing silicone macromer in a composition thereof, and a covalent bond is formed between the contact lens base material and the above-mentioned hydrophilic polymer.

The composition of the epoxy group-containing silicone macromer in the contact lens base material of the present disclosure is typically from 1 part by mass to 50 parts by mass, preferably from 5 parts by mass to 45 parts by mass, more preferably from 10 parts by mass to 40 parts by mass with respect to 100 parts by mass of a monomer composition of the contact lens base material.

The contact lens base material of the present disclosure includes (I) a silicone-containing vinyl monomer, (II) a hydrophobic vinyl monomer free of silicone, (III) a non-silicone vinyl cross-linking agent, (IV) a hydrophilic vinyl monomer, (V) a UV-absorbing vinyl monomer, or any combination thereof as a composition except the epoxy group-containing silicone macromer.

The composition of (I) the silicone-containing vinyl monomer in the contact lens base material of the present disclosure is typically from 7 parts by mass to 55 parts by mass, preferably from 10 parts by mass to 50 parts by mass, more preferably from 13 parts by mass to 35 parts by mass with respect to 100 parts by mass of the monomer composition of the contact lens base material of the present disclosure.

The composition of (II) the hydrophobic vinyl monomer free of silicone in the contact lens base material of the present disclosure is typically from 1 part by mass to 50 parts by mass, preferably from 2 parts by mass to 30 parts by mass, more preferably from 5 parts by mass to 25 parts by mass with respect to 100 parts by mass of the monomer composition of the contact lens base material of the present disclosure.

The composition of (III) the non-silicone vinyl cross-linking agent in the contact lens base material of the present disclosure is typically from 0.01 part by mass to 10 parts by mass, preferably from 0.1 part by mass to 10 parts by mass, more preferably from 0.2 part by mass to 5 parts by mass with respect to 100 parts by mass of the monomer composition of the contact lens base material of the present disclosure.

The composition of (IV) the hydrophilic vinyl monomer in the contact lens base material of the present disclosure is typically from 5 parts by mass to 80 parts by mass, preferably from 10 parts by mass to 75 parts by mass, more preferably from 15 parts by mass to 70 parts by mass with respect to 100 parts by mass of the monomer composition of the contact lens base material of the present disclosure.

The composition of (V) the UV-absorbing vinyl monomer in the contact lens base material of the present disclosure is typically from 0.01 part by mass to 20 parts by mass, preferably from 0.1 part by mass to 10 parts by mass, more preferably from 0.5 part by mass to 5 parts by mass with respect to 100 parts by mass of the monomer composition of the contact lens base material of the present disclosure.

Any suitable silicone-containing vinyl monomer may be used as (I) the silicone-containing vinyl monomer. A preferred kind of silicone-containing vinyl monomer is a silicone-containing vinyl monomer having a tris(trialkylsiloxy)silyl group or a bis(trialkylsilyloxy)alkylsilyl group. Examples of such preferred silicone-containing vinyl monomer include, but not limited to, 3-acrylamidopropyl-bis(trimethylsiloxy)methylsilane, 3-N-methylacrylamidopropylbis(trimethylsiloxy)methylsilane, N-[tris(trimethylsiloxy)silylpropyl]-(meth)acrylamide, N-[tris(dimethylpropylsiloxy)-silylpropyl]-(meth)acrylamide, N-[tris(dimethylphenylsiloxy)silylpropyl](meth)acrylamide, N-[tris(dimethylethylsiloxy)silylpropyl](meth)acrylamide, N-(2-hydroxy-3-(3-(bis(trimethylsilyloxy)methylsilyl)propyloxy)propyl)-2-methylacrylamide; N-(2-hydroxy-3-(3-(bis(trimethylsilyloxy)methylsilyl)propyloxy)propyl)acrylamide ; N,N-bis[2-hydroxy-3-(3-(bis(trimethylsilyloxy)methylsilyl)propyloxy)propyl]-2-methylacrylamide; N,N-bis[2-hydroxy-3-(3-(bis(trimethylsilyloxy)methylsilyl)propyloxy)propyl]acrylamide ; N-(2-hydroxy-3-(3-(tris(trimethylsilyloxy)silyl)propyloxy)propyl)-2-methylacrylamide; N-(2-hydroxy-3-(3-(tris(trimethylsilyloxy)silyl)propyloxy)propyl)acrylamide; N,N-bis[2-hydroxy-3-(3-(tris(trimethylsilyloxy)silyl)propyloxy)propyl]-2-methylacrylamide; N,N-bis[2-hydroxy-3-(3-(tris(trimethylsilyloxy)silyl)propyloxy)propyl]acrylamide; N-[2-hydroxy-3-(3-(t-butyldimethylsilyl)propyloxy)propyl]-2-methylacrylamide; N-[2-hydroxy-3-(3-(t-butyldimethylsilyl)propyloxy)propyl]acrylamide; N,N-bis[2-hydroxy-3-(3-(t-butyldimethylsilyl)propyloxy)propyl]-2-methylacrylamide; N,N-bis[2-hydroxy-3-(3-(t-butyldimethylsilyl)propyloxy)propyl]acrylamide; 3-methacryloxypropylpentamethyldisiloxane, tris(trimethylsilyloxy)silylpropyl methacrylate (TRIS), (3-methacryloxy-2-hydroxypropyloxy)propylbis(trimethylsiloxy)methylsilane (SIGMA), (3-methacryloxy-2-hydroxypropyloxy)propyltris(trimethylsiloxy)silane, 3-(trimethylsilyl)propyl vinyl carbonate, 3-(vinyloxycarbonylthio)propyl-tris(trimethyl-siloxy)silane, 3-[tris(trimethylsiloxy)silyl]propyl vinyl carbamate, 3-[tris(trimethylsiloxy)silyl]propyl allyl carbamate, 3-[tris(trimethylsiloxy)silyl]propyl vinyl carbonate, t-butyldimethyl-siloxyethyl vinyl carbonate, trimethylsilylethyl vinyl carbonate, trimethylsilylmethyl vinyl carbonate, and 4-(2-hydroxyethyl)-1-[3-tris(trimethylsiloxy)silylpropyl]-2-methylidene succinate.

Another preferred kind of silicone-containing vinyl monomer is a polydimethylsiloxane-containing vinyl monomer. Examples of such polydimethylsiloxane-containing vinyl monomer include mono-(meth)acryloyl-terminated polydimethylsiloxanes having various molecular weights (e.g., mono-3-methacryloxypropyl-terminated and mono-butyl-terminated polydimethylsiloxanes or mono-(3-methacryloxy-2-hydroxypropyloxy)propyl-terminated and mono-butyl-terminated polydimethylsiloxanes), mono-(meth)acrylamide-terminated polydimethylsiloxanes having various molecular weights, and combinations thereof.
(I) The silicone-containing vinyl monomer is preferably 3-(meth)acryloxy-2-hydroxypropyloxy)propylbis(trimethylsiloxy)methylsilane, 3-(meth)acryloxyethoxypropyloxypropylbis(trimethylsiloxy)methyls ilane, 3-(meth)acrylamidopropyl-bis(trimethylsiloxy)methylsilane, 3-N-methyl(meth)acrylamidopropylbis(trimethylsiloxy)methylsilane, 4-(2-hydroxyethyl)-1-[3-tris(trimethylsiloxy)silylpropyl]-2-methylidene succinate, mono-(meth)acryloyl-terminated polydimethylsiloxanes having various molecular weights, mono-(meth)acrylamide-terminated polydimethylsiloxanes having various molecular weights, or combinations thereof.

Any suitable hydrophobic vinyl monomer may be used as (II) the hydrophobic vinyl monomer free of silicone. Preferred examples of the hydrophobic vinyl monomer include methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyltoluene, vinyl ethyl ether, perfluorohexylethyl-thiocarbonyl-aminoethyl-methacrylate, isobornyl methacrylate, trifluoroethyl methacrylate, hexafluoroisopropyl methacrylate, and hexafluorobutyl methacrylate.

Any suitable non-silicone vinyl cross-linking agent may be used as (III) the non-silicone vinyl cross-linking agent. Preferred examples of the non-silicone cross-linking agent include, but not limited to, tetraethylene glycol di(meth)acrylate, triethylene glycol di(meth)acrylate, diethylene glycol di(meth)acrylate, ethylene glycol di(meth)acrylate, tetraethylene glycol divinyl ether, triethylene glycol divinyl ether, diethylene glycol divinyl ether, ethylene glycol divinyl ether, trimethylolpropane trimethacrylate, pentaerythritol tetramethacrylate, bisphenol A dimethacrylate, vinyl methacrylate, ethylediamine di-(meth)acrylamide, glycerol dimethacrylate, triallyl isocyanurate, triallyl cyanurate, allyl (meth)acrylate, N-allyl-(meth)acrylamide, 1,3-bis(methacrylamidopropyl)-1,1,3,3-tetrakis(trimethylsiloxy)disiloxane, N,N'-methylenebisacrylamide, N,N'-methylenebismethacrylamide, N,N'-ethylenebisacrylamide, N,N'-ethylenebismethacrylamide, a product of a diamine (preferably selected from the group consisting of: N,N'-bis(hydroxyethyl)ethylediamine; N,N'-dimethylethylediamine; ethylediamine; N,N'-dimethyl-1,3-propadiamine; N,N'-diethyl-1,3-propadiamine; propane-1,3-diamine; butane-1,4-diamine; pentane-1,5-diamine; hexamethylediamine; isophorodiamine; and combinations thereof), an epoxy-containing vinyl monomer (preferably selected from the group consisting of: glycidyl (meth)acrylate; vinyl glycidyl ether; allyl glycidyl ether; and combinations thereof), and combinations thereof. The cross-linking agent is more preferably selected from the group consisting of: tetra(ethylene glycol) di-(meth)acrylate; tri(ethylene glycol) di-(meth)acrylate; ethylene glycol di-(meth)acrylate; di(ethylene glycol) di-(meth)acrylate; glycerol dimethacrylate; allyl (meth)acrylate; N,N'-methylenebis(meth)acrylamide; N,N'-ethylenebis(meth)acrylamide; N,N'-dihydroxyethylenebis(meth)acrylamide; triallyl isocyanurate; tetraethylene glycol divinyl ether; triethylene glycol divinyl ether; diethylene glycol divinyl ether; ethylene glycol divinyl ether; and combinations thereof.

Any suitable hydrophilic vinyl monomer may be used as (IV) the hydrophilic vinyl monomer. Preferred examples of the hydrophilic vinyl monomer include, but not limited to, N-vinylpyrrolidone, N,N-dimethyl(meth)acrylamide, (meth)acrylamide, hydroxyethyl(meth)acrylamide, hydroxyethyl (meth)acrylate, hydroxypropyl (meth)acrylate, hydroxybutyl (meth)acrylate, glycerol methacrylate, polyethylene glycol (meth)acrylate, polyethylene glycol C1 to C4-alkyl ether (meth)acrylate having number-average molecular weight of 1,500 at maximum, N-vinylformamide, N-vinylacetamide, N-vinylisopropylamide, N-vinyl-N-methylacetamide, N-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, (meth)acrylic acid, ethyl acrylate, MPC, and combinations thereof. The hydrophilic vinyl monomer is preferably hydroxylethyl (meth)acrylate, hydroxypropyl (meth)acrylate, hydroxybutyl (meth)acrylate, N-vinylpyrrolidone, N-vinyl-N-methylacetamide, N-vinylformamide, N-vinylacetamide, N-vinylisopropylamide, or a combination thereof. The hydrophilic vinyl monomer is still more preferably hydroxylethyl (meth)acrylate, N-vinylpyrrolidone, N-vinyl-N-methylacetamide, or a combination thereof.

Any suitable UV-absorbing vinyl monomer may be used as (V) the UV-absorbing vinyl monomer. Preferred examples of the UV-absorbing vinyl monomer include, but not limited to, 2-(2-hydroxy-5-vinylphenyl)-2H-benzotriazole, 2-(2-hydroxy-5-acrylyloxyphenyl)-2H-benzotriazole, 2-(2-hydroxy-3-methacrylamidomethyl-5-tert-octylphenyl)benzotriazole, 2-(2'-hydroxy-5'-methacrylamidophenyl)-5-chlorobenzotriazole, 2-(2'-hydroxy-5'-methacrylamidophenyl)-5-methoxybenzotriazole, 2-(2'-hydroxy-5'-methacryloxypropyl-3'-t-butyl-phenyl)-5-chlorobenzotriazole, 2-(2'-hydroxy-5'-methacryloxypropylphenyl)benzotriazole, 2-hydroxy-5-methoxy-3-(5-(trifluoromethyl)-2H-benzo[d][1,2,3]triazol-2-yl)benzyl methacrylate, 2-hydroxy-5-methoxy-3-(5-methoxy-2H-benzo[d][1,2,3]triazol-2-yl)benzyl methacrylate, 3-(5-fluoro-2H-benzo[d][1,2,3]triazol-2-yl)-2-hydroxy-5-methoxybenzyl methacrylate, 3-(2H-benzo[d][1,2,3]triazol-2-yl)-2-hydroxy-5-methoxybenzyl methacrylate, 3-(5-chloro-2H-benzo[d][1,2,3]triazol-2-yl)-2-hydroxy-5-methoxybenzyl methacrylate, 2-hydroxy-5-methoxy-3-(5-methyl-2H-benzo[d][1,2,3]triazol-2-yl)benzyl methacrylate, 2-hydroxy-5-methyl-3-(5-(trifluoromethyl)-2H-benzo[d][1,2,3]triazol-2-yl)benzyl methacrylate, 4-allyl-2-(5-chloro-2H-benzo[d][1,2,3]triazol-2-yl)-6-methoxy phenol, 2-{2'-hydroxy-3'-tert-5'[3"-(4"-vinylbenzyloxy)propoxy]phenyl}-5-methoxy-2H-benzotriazole, phenol, 2-(5-chloro-2H-benzotriazol-2-yl)-6-(1,1-dimethylethyl)-4-ethenyl, 2-(2'-hydroxy-5'-methacryloxyethylphenyl)benzotriazole (2-propenoic acid, 2-methyl-, 2-[3-(2H-benzotriazol-2-yl)-4-hydroxyphenyl]ethyl ester (Norbloc), 2-{2'-hydroxy-3'-tert-butyl-5'-[3'-methacryloyloxypropoxy]phenyl}-5-methoxy-2H-benzotriazole, 2-[2'-hydroxy-3'-tert-butyl-5'-(3'-acryloyloxypropoxy)phenyl]-5-trifluoromethyl-2H-benzotriazole, 2-(2'-hydroxy-5-methacrylamidophenyl)-5-methoxybenzotriazole, 2-(3-allyl-2-hydroxy-5-methylphenyl)-2H-benzotriazole, 2-(2-hydroxy-3-methallyl-5-methylphenyl)-2H-benzotriazole, 2-3'-t-butyl-2'-hydroxy-5'-(3"-dimethyl vinylsilylpropoxy)-2'-hydroxy-phenyl)-5-methoxybenzotriazole, and 2-(2'-hydroxy-5'-methacryloylpropyl-3'-tert-butyl-phenyl)-5-methoxy-2H-benzotriazole.

The contact lens base material of the present disclosure is synthesized by copolymerizing a polymerizable composition containing the epoxy group-containing silicone macromer, (I) the silicone-containing vinyl monomer, (II) the hydrophobic vinyl monomer free of silicone, (III) the non-silicone vinyl cross-linking agent, (IV) the hydrophilic vinyl monomer, (V) the UV-absorbing vinyl monomer, and any combination thereof. In the copolymerization reaction, any solvent and any thermal initiator or photoinitiator serving as a radical initiator for the copolymerization reaction may be used.

Further, the synthesis method is not particularly limited, and various methods well known to a person skilled in the art may be used. For example, the contact lens base material may be obtained by mixing and uniformly dissolving the above-mentioned composition, and dispensing the solution into a contact lens mold, followed by polymerization through irradiation with visible light or UV light for a predetermined period of time.

Suitable examples of the solvent include, but not limited to, tetrahydrofuran, tripropylene glycol methyl ether, dipropylene glycol methyl ether, ethylene glycol n-butyl ether, acetone, methyl ethyl ketone, diethylene glycol n-butyl ether, diethylene glycol methyl ether, ethylene glycol phenyl ether, propylene glycol methyl ether, propylene glycol methyl ether acetate, dipropylene glycol methyl ether acetate, propylene glycol n-propyl ether, dipropylene glycol n-propyl ether, tripropylene glycol n-butyl ether, propylene glycol n-butyl ether, dipropylene glycol n-butyl ether, tripropylene glycol n-butyl ether, propylene glycol phenyl ether, dipropylene glycol dimethyl ether, polyethylene glycol, polypropylene glycol, ethyl acetate, butyl acetate, amyl acetate, methyl lactate, ethyl lactate, i-propyl lactate, methylene chloride, 2-butanol, 1-propanol, 2-propanol, menthol, 1-hexanol, cyclohexanol, cyclopentanol and exo-norborneol, 2-pentanol, 3-pentanol, 2-hexanol, 3-hexanol, 3-methyl-2-butanol, 2-heptanol, 2-octanol, 2-nonanol, 2-decanol, 3-octanol, norborneol, tert-butanol, tert-amyl alcohol, 2-methyl-2-pentanol, 2,3-dimethyl-2-butanol, 3-methyl-3-pentanol, 1-methylcyclohexanol, 2-methyl-2-hexanol, 3,7-dimethyl-3-octanol, 1-chloro-2-methyl-2-propanol, 2-methyl-2-heptanol, 2-methyl-2-octanol, 2-2-methyl-2-nonanol, 2-methyl-2-decanol, 3-methyl-3-hexanol, 3-methyl-3-heptanol, 4-methyl-4-heptanol, 3-methyl-3-octanol, 4-methyl-4-octanol, 3-methyl-3-nonanol, 4-methyl-4-nonanol, 3-methyl-3-octanol, 3-ethyl-3-hexanol, 3-methyl-3-heptanol, 4-ethyl-4-heptanol, 4-propyl-4-heptanol, 4-isopropyl-4-heptanol, 2,4-dimethyl-2-pentanol, 1-methylcyclopentanol, 1-ethylcyclopentanol, 1-ethylcyclopentanol, 3-hydroxy-3-methyl-1-butene, 4-hydroxy-4-methyl-1-cyclopentanol, 2-phenyl-2-propanol, 2-methoxy-2-methyl-2-propanol, 2,3,4-trimethyl-3-pentanol, 3,7-dimethyl-3-octanol, 2-phenyl-2-butanol, 2-methyl-1-phenyl-2-propanol, 3-ethyl-3-pentanol, 1-ethoxy-2-propanol, 1-methyl-2-propanol, t-amyl alcohol, isopropanol, 1-methyl-2-pyrrolidone, N,N-dimethylpropionamide, dimethylformamide, dimethylacetamide, dimethylpropionamide, N-methylpyrrolidinone, and mixtures thereof.

A suitable thermal polymerization initiator is a thermal polymerization initiator known to a person skilled in the art, and includes, for example, a peroxide, a hydroperoxide, an azo-bis(alkyl- or cycloalkyl-nitrile), a persulfate, a percarbonate, and mixtures thereof. Examples thereof include benzoyl peroxide, tert-butyl peroxide, di-tert-butyl-diperoxyphthalate, tert-butyl hydroperoxide, azo-bis(isobutyronitrile) (AIBN), 1,1-azodiisobutylamidine, 1,1'-azo-bis(1-cyclohexanecarbonitrile), and 2,2'-azo-bis(2,4-dimethylvaleronitrile). The polymerization is conveniently performed at a temperature of, for example, from 25°C to 140°C, preferably from 40°C to 120°C in the above-mentioned solvent. The reaction time may vary in a wide limitation, but is conveniently, for example, from 1 hour to 24 hours, preferably from 2 hours to 12 hours. It is preferred that the components and the solvent to be used in the polymerization reaction be degassed or purged with nitrogen or argon in advance.

A suitable photoinitiator is benzoin methyl ether, diethoxyacetophenone, benzoylphosphine oxide, 1-hydroxycyclohexyl phenyl ketone, or a Darocur (Registered trademark) or Irgacur (Registered trademark)-type photoinitiator, preferably Darocur (Registered trademark) 1173, Darocur (Registered trademark) 2959, Irgacur (Registered trademark) 819, or a germane-based Norrish-type I photoinitiator. Examples of the benzoylphosphine initiator include 2,4,6-trimethylbenzoyldiphenylphosphine oxide, bis-(2,6-dichlorobenzoyl)-4-N-propylphenylphosphine oxide, and bis-(2,6-dichlorobenzoyl)-4-N-butylphenylphosphine oxide. For example, a reactive photoinitiator that may be incorporated into the macromer or may be used as a special monomer is also suitable.

The polymerization reaction may be performed in the atmosphere, but may be performed in an atmosphere of an inert gas, such as nitrogen or argon, for the purpose of improving a polymerization rate. When the polymerization is performed in an atmosphere of an inert gas, the pressure in a polymerization system is desirably set to 1 kgf/cm² or less.

After the polymerization, the resultant is released from the mold by a known method, and thus a contact lens base material can be taken out in a dry state. Alternatively, the contact lens base material may also be released from the mold by being immersed in a solvent (e.g., water, methanol, ethanol, 1-propanol, 2-propanol, or a mixed solution thereof) together with the mold so that the contact lens base material is swollen. Further, the contact lens base material may be obtained by being cleaned by, for example, being repeatedly immersed in those solvents to remove residues of the components, residual materials, by-products, and the like.

Examples of the solvent to be used for the cleaning include water, methanol, ethanol, 1-propanol, 2-propanol, and a mixture thereof. The cleaning may be performed by, for example, immersing the polymer in the solvent at a temperature of from 10°C to 40°C for from 10 minutes to 10 hours. After the cleaning, the polymer is immersed in water to replace the solvent with water.

### <Covalent Bond between Hydrophilic Polymer and Contact Lens Base Material>

The hydrophilic polymer of the present disclosure and the contact lens base material of the present disclosure are bonded to each other via at least one covalent bond selected from the group consisting of the following formulae (A-1), (A-2), (B-1), and (B-2). The covalent bond is formed by a reaction between the reactive monomer in the hydrophilic polymer and the epoxy group-containing silicone macromer in the contact lens base material.

The following formulae (A-1) and (A-2) are each formed by a reaction between 2-aminoethyl methacrylate in the hydrophilic polymer and the epoxy group-containing silicone macromer in the contact lens base material.

The following formulae (B-1) and (B-2) are each formed by a reaction between methacrylic acid in the hydrophilic polymer and the epoxy group-containing silicone macromer in the contact lens base material.

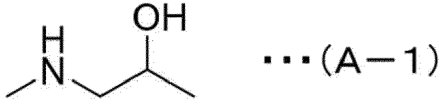

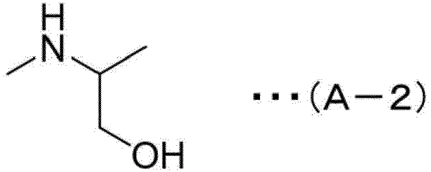

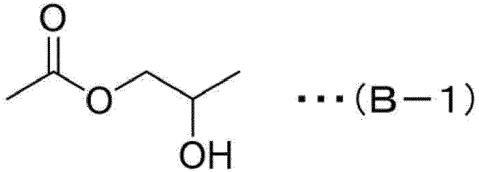

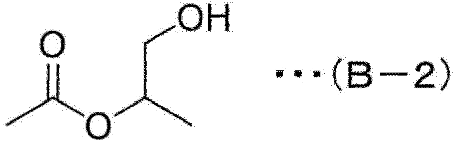

The covalent bond between the hydrophilic polymer and the contact lens base material is obtained by treating the hydrophilic polymer and the contact lens base material at a high temperature of from 60°C to 200°C for from 10 minutes to 10 hours. In this case, the covalent bond may be formed under highpressure conditions, and is obtained, for example, by performing autoclave treatment at 121°C for 20 minutes.

For example, methyldiethanolamine, triethylamine, sodium hydroxide, or potassium hydroxide may be added thereto for catalyzing the reaction.

The hydrophilic polymer is dissolved in water or physiological saline at a concentration of from about 0.01 part by mass to about 10 parts by mass, preferably from 0.1 part by mass to 5.0 parts by mass, to provide a hydrophilic polymer solution. In general, the amount of the hydrophilic polymer solution to be used per contact lens base material is from 0.1 g to 100 g, preferably from 0.5 g to 50 g, more preferably from 0.5 g to 10 g.

After the reaction, the surface of the resultant contact lens is washed with water or physiological saline to remove by-products.

### (Configuration Example of Contact Lens of the Present Disclosure)

Examples of the combinations of the hydrophilic polymer and the epoxy group-containing silicone macromer to be used in the production of the contact lens of the present disclosure are given below, but are not limited thereto.

Hydrophilic polymer:Epoxy group-containing silicone macromer represented by the formula (1)
2-Aminoethyl methacrylate:Macromer in which, in the formula (1), "a" represents an integer of from 30 to 280, "b" represents an integer of from 1 to 70, R¹ represents -CH₃, R² represents -CH₃, R³ represents -CH₂CH₂CH₂-, R⁴ represents - CH₂CH₂CH₂-, and X⁰ is represented by the formula (2) {where R⁷ represents -CH₂CH₂CH₂-O-CH₂-, and R⁸ represents -H} .

Methacrylic acid:Macromer in which, in the formula (1), "a" represents an integer of from 30 to 280, "b" represents an integer of from 1 to 70, R¹ represents -CH₃, R² represents -CH₃, R³ represents -CH₂CH₂CH₂-, R⁴ represents -CH₂CH₂CH₂-, and X° is represented by the formula (2) {where R⁷ represents -CH₂CH₂CH₂-O-CH₂-, R⁸ represents -H}.

Methacrylic acid:Macromer in which, in the formula (1), "a" represents an integer of from 30 to 280, "b" represents an integer of from 1 to 70, R¹ represents -CH₃, R² represents -CH₃, R³ represents -CH₂CH₂CH₂-, R⁴ represents -CH₂CH₂CH₂-, and X° is represented by the formula (3) {where R¹¹ represents -CH₂CH₂-}.

2-Aminoethyl methacrylate:Macromer in which, in the formula (1), "a" represents an integer of from 30 to 280, "b" represents an integer of from 1 to 70, R¹ represents -CH₃, R² represents -CH₃, R³ represents -CH₂CH₂CH₂-, R⁴ represents - CH₂CH₂CH₂-, and X⁰ is represented by the formula (3) {where R¹¹ represents -CH₂CH₂-}.

In addition, the contact lens of the present disclosure may be formed by changing the hydrophilic polymer and the epoxy group-containing silicone macromer represented by the formula (1) in each of the above-mentioned combinations to the hydrophilic polymer and the epoxy group-containing silicone macromer represented by the formula (1) in another combination.

### (Use for production of Contact Lens of the Present Disclosure)

One embodiment of the present disclosure is also directed to a method of using the above-mentioned polymer containing a constituent monomer based on at least one kind of 2-aminoethyl methacrylate or methacrylic acid and the above-mentioned epoxy group-containing silicone macromer represented by the formula (1) for production of a contact lens.

### (Contact Lens Base Material of the Present Disclosure)

One embodiment of the present disclosure is also directed to a contact lens base material including the above-mentioned epoxy group-containing silicone macromer represented by the formula (1) in a composition thereof.

### Examples

The contact lens and the contact lens base material of the present disclosure are specifically described below by way of Examples and Comparative Examples. However, the contact lens and the contact lens base material of the present disclosure are not limited thereto.

### <Preparation of Hydrophilic Polymer>

### o Preparation of Hydrophilic Polymer containing Constituent Monomer based on 2-Aminoethyl Methacrylate serving as Reactive Monomer

### [Synthesis Example 1-1]

79.27 g (0.268 mol) of MPC (manufactured by NOF Corporation) and 4.46 g (0.027 mol) of 2-aminoethyl methacrylate hydrochloride (AeMA, manufactured by Sigma-Aldrich) were dissolved in 330.95 g of distilled water (manufactured by Otsuka Pharmaceutical Co., Ltd.). The solution was placed in a four-necked flask, and nitrogen was blown into the flask at 0.4 L/min for 30 minutes under stirring at 30°C and 150 rpm. The temperature of the solution was raised to 65°C, and 0.60 g of 2,2'-azobis(2-methylpropionamidine) dihydrochloride (manufactured by Wako Pure Chemical Industries, Ltd.) was added thereto. Then, 2,2'-azobis(2-methylpropionamidine) dihydrochloride adhering to an inner wall of the flask was washed away with 5.0 g of distilled water. The flow rate of nitrogen was set to 0.2 L/min, and the temperature of the solution was raised to 70°C and held for 120 minutes. After the polymerization reaction, the polymerization liquid was added dropwise to 3 liters of acetone under stirring, and precipitated sediment was filtered, followed by vacuum-drying at room temperature for 48 hours, to thereby provide powder.

### o Preparation of Hydrophilic Polymer containing Constituent Monomer based on Methacrylic Acid (Carboxylic Acid serving as Reactive Group) serving as Reactive Monomer

### [Synthesis Example 1-2]

81.57 g (0.276 mol) of MPC (manufactured by NOF Corporation) and 2.64 g (0.031 mol) of methacrylic acid (manufactured by Kishida Chemical Co., Ltd.) were dissolved in 330.95 g of distilled water (manufactured by Otsuka Pharmaceutical Co., Ltd.). The solution was placed in a four-necked flask, and nitrogen was blown into the flask at 0.4 L/min for 30 minutes under stirring at 30°C and 150 rpm. The temperature of the solution was raised to 65°C, and 0.60 g of 2,2'-azobis(2-methylpropionamidine) dihydrochloride (manufactured by Wako Pure Chemical Industries, Ltd.) was added thereto. Then, 2,2'-azobis(2-methylpropionamidine) dihydrochloride adhering to an inner wall of the flask was washed away with 5.0 g of distilled water. The flow rate of nitrogen was set to 0.2 L/min, and the temperature of the solution was raised to 70°C and held for 120 minutes. After the polymerization reaction, the polymerization liquid was added dropwise to 3 liters of acetone under stirring, and precipitated sediment was filtered, followed by vacuum-drying at room temperature for 48 hours, to thereby provide powder.

### o Preparation of Polymer free of Reactive Monomer

### [Synthesis Example 1-3]

79.27 g (0.268 mol) of MPC (manufactured by NOF Corporation) was dissolved in 330.95 g of distilled water (manufactured by Otsuka Pharmaceutical Co., Ltd.). The solution was placed in a four-necked flask, and nitrogen was blown into the flask at 0.4 L/min for 30 minutes under stirring at 30°C and 150 rpm. The temperature of the solution was raised to 65°C, and 0.60 g of 2,2'-azobis(2-methylpropionamidine) dihydrochloride (manufactured by Wako Pure Chemical Industries, Ltd.) was added thereto. Then, 2,2'-azobis(2-methylpropionamidine) dihydrochloride adhering to an inner wall of the flask was washed away with 5.0 g of distilled water. The flow rate of nitrogen was set to 0.2 L/min, and the temperature of the solution was raised to 70°C and held for 120 minutes. After the polymerization reaction, the polymerization liquid was added dropwise to 3 liters of acetone under stirring, and precipitated sediment was filtered, followed by vacuum-drying at room temperature for 48 hours, to thereby provide powder.

### <Synthesis of Epoxy Group-containing Silicone Macromer>

The synthesis of an epoxy group-containing silicone macromer is as described below.

### [Synthesis Example 2-1]

### o First Step

In a 100 mL light-shielding bottle, 8.40 g of X-22-164AS (manufactured by Shin-Etsu Chemical Co., Ltd., dual-end methacryloyloxypropyl polydimethylsiloxane (molecular weight≈1,000)), 20.41 g of octamethyltetracyclosiloxane (D4), and 0.84 g of 1,3,5,7-tetramethylcyclotetrasiloxane (D'4) were mixed, and further 0.04 g of trifluoromethanesulfonic acid was added. After the reaction at 25°C for 6 hours, 0.25 g of sodium hydrogen carbonate was added thereto to terminate the reaction by neutralization. Subsequently, 2.97 g of sodium sulfate was added thereto to perform dehydration for 30 minutes. Sodium hydrogen carbonate and sodium sulfate were removed by filtration. Thus, 27.35 g of a transparent liquid (see: epoxy group-containing silicone macromer precursor in Table 1 below) was obtained.

### ∘ Second Step

In a 100 mL three-necked flask, 10.00 g of the transparent liquid (epoxy group-containing silicone macromer precursor represented by the formula (5)), 0.81 g of allyl glycidyl ether (manufactured by Tokyo Chemical Industry Co., Ltd.) (ene monomer having an epoxy group), and 0.01 g of dibutylhydroxytoluene (manufactured by Wako Pure Chemical Industries, Ltd.) serving as a stabilizer were dissolved in 20.07 g of toluene (manufactured by Kishida Chemical Co., Ltd.). 100 µL of platinum(0)-1,3-divinyltetramethyldisiloxane complex (manufactured by Aldrich) was added thereto. After the reaction at 25°C for 6 hours, 2.0 g of activated carbon was added, and stirring was further performed for 1 hour. Subsequently, 2.0 g of sodium sulfate was added thereto to perform dehydration for 30 minutes. After that, activated carbon and sodium sulfate were removed by filtration, and the solvent was removed under reduced pressure. Thus, 9.28 g of an epoxy group-containing silicone macromer represented by the formula (1) was obtained.

The results of Synthesis Example 2-1 are shown in Table 1.

### [Synthesis Examples 2-2 to 2-8]

A reaction was performed by changing the loaded amounts of the X-22-164AS, D4, and D'4 in the first step and using allyl glycidyl ether or using 1,2-epoxy-5-hexene instead of allyl glycidyl ether in the second step by the same procedure as in Synthesis Example 2-1. Thus, various epoxy group-containing silicone macromers each represented by the formula (1) were synthesized as Synthesis Examples 2-2 to 2-8.

The results of Synthesis Examples 2-2 to 2-8 are shown in Table 1.

The ene monomers each having an epoxy group used in Synthesis Examples 2-2 to 2-8 are as described below.
Synthesis Example 2-2: allyl glycidyl ether
Synthesis Example 2-3: allyl glycidyl ether
Synthesis Example 2-4: 1,2-epoxy-5-hexene
Synthesis Example 2-5: allyl glycidyl ether
Synthesis Example 2-6: allyl glycidyl ether
Synthesis Example 2-7: 1,2-epoxy-5-hexene
Synthesis Example 2-8: allyl glycidyl ether

### o Synthesis of Silicone Macromer free of Epoxy Group

### [Synthesis Example 2-9]

In a 100 mL light-shielding bottle, 8.40 g of X-22-164AS (manufactured by Shin-Etsu Chemical Co., Ltd., dual-end methacryloyloxypropyl polydimethylsiloxane (molecular weight≈1,000)) and 21.43 g of octamethyltetracyclosiloxane (D4) were mixed, and further 0.04 g of trifluoromethanesulfonic acid was added. After the reaction at 25°C for 6 hours, 0.25 g of sodium hydrogen carbonate was added thereto to terminate the reaction by neutralization. Subsequently, 2.97 g of sodium sulfate was added thereto to perform dehydration for 30 minutes. Sodium hydrogen carbonate and sodium sulfate were removed by filtration. Thus, 28.39 g of a silicone macromer free of an epoxy group to be used for Comparative Example was obtained.

The silicone macromer free of an epoxy group corresponds to a structure in which "b" represents 0 in the formula (1).

The results of Synthesis Example 2-9 are shown in Table 1.

### <Synthesis of Contact Lens Base Material>

### o Composition of Contact Lens Base Material

1) Epoxy group-containing silicone macromers: Synthesis Examples 2-1 to 2-8
2) Silicone macromer free of an epoxy group: Synthesis Example 2-9

### o Composition except Epoxy Group-containing Silicone Macromer

(I) Silicone-containing vinyl monomer: SIGMA (3-methacryloxy-2-hydroxypropyloxy)propylbis(trimethylsiloxy)methylsilane (III) Non-silicone vinyl cross-linking agent: TEGDMA (tetraethylene glycol dimethacrylate)
(IV) Hydrophilic vinyl monomer: HEMA (hydroxylethyl methacrylate) and NVP (N-vinylpyrrolidone)

### o Solvent HeOH: 1-hexanol

### o Polymerization Initiator: I-819 (Irgucure 819)

### o Contact Lens Base Material using Epoxy Group-containing Silicone Macromer

### [Synthesis Example 3-1]

30.00 Parts by mass of the epoxy group-containing silicone macromer of Synthesis Example 2-1, 20.00 parts by mass of SIGMA, 1.00 part by mass of TEGDMA, 10.00 parts by mass of HEMA, 39.00 parts by mass of NVP, and 30.00 parts by mass of HeOH were mixed. Subsequently, 2.00 parts by mass of I-819 was added to the mixture to prepare a composition, and the uniformity of the composition was evaluated.

The composition was dispensed into a contact lens mold and placed in a UV irradiation device (manufactured by CCS Inc.). A polymer of the composition was obtained by irradiation with UV light at 405 nm and 1.5 mW/cm² for 30 minutes in the UV irradiation device.

The polymer was taken out from the mold, immersed in 40 g of a solution of 2-propanol:ion-exchanged water=1:1 for 2 hours, then immersed in 40 g of ion-exchanged water for 1 hour, and further immersed in 40 g of physiological saline for 1 hour. Thus, a contact lens base material was obtained.

The results of Synthesis Example 3-1 are shown in Table 2.

### [Evaluation of Uniformity of Composition]

The composition was placed in a colorless and transparent container and visually evaluated in accordance with the following criteria.
+: uniform and transparent
-: non-uniform, cloudy or with sediment or the like

### [Synthesis Examples 3-2 to 3-8]

Synthesis Examples 3-2 to 3-8 were obtained by synthesizing contact lens base materials through use of the epoxy group-containing silicone macromers synthesized in Synthesis Examples 2-2 to 2-8, respectively, by the same procedure as in Synthesis Example 3-1.

The results of Synthesis Examples 3-2 to 3-8 are shown in Table 2.

### o Contact Lens Base Material using Silicone Macromer free of Epoxy Group

### [Synthesis Example 3-9]

An attempt was made to synthesize a contact lens base material through use of the silicone macromer free of an epoxy group synthesized in Synthesis Example 2-9 by the same procedure as in Synthesis Example 3-1. The uniformity of the composition was evaluated to be "-", and hence subsequent polymerization was not performed.

The results of Synthesis Example 3-9 are shown in Table 2.

### [Synthesis Example 3-10]

Synthesis Example 3-10 was obtained by synthesizing a contact lens base material through use of the silicone macromer free of an epoxy group synthesized in Synthesis Example 2-9 by the same procedure as in Synthesis Example 3-1.

The results of Synthesis Example 3-10 are shown in Table 2.

### [Synthesis Example 3-11]

Synthesis Example 3-11 was obtained by synthesizing a contact lens base material through use of a commercially available silicone macromer free of an epoxy group (manufactured by Shin-Etsu Chemical Co., Ltd., product name: "X22-164AS") by the same procedure as in Synthesis Example 3-1.

The synthesis results of Synthesis Example 3-11 are shown in Table 2.

### <Hydrophilicity Test Method (Water Break-up Time (WBUT) Test Method)>

The hydrophilicity of the surface of a contact lens (base material) was evaluated by the following procedure.

A contact lens (base material) was immersed in physiological saline overnight. In a windless room, the contact lens (base material) was taken out from the physiological saline and exposed to illumination. The time required for a water film to be broken down and expose the surface of the contact lens (base material) (WBUT) was visually recorded. A score of "0" was given when the WBUT was less than 5 seconds, a score of "1" was given when the WBUT was 5 seconds or more and less than 15 seconds, and a score of "2" was given when the WBUT was 15 seconds or more.

### <Lubricity Test Method>

The lubricity of the surface of a contact lens (base material) was evaluated by the following procedure.

1 Day ACUVUE (Registerd trademark) (manufactured by Johnson & Johnson K.K.) was used as a reference for a lubricity test. A contact lens (base material) that had been immersed in physiological saline overnight was taken out and placed on an index finger, and subjected to evaluation of lubricity. The evaluation of lubricity was performed by using 1 Day ACUVUE (Registerd trademark) just taken out of a blister pack as a reference (4 points). The evaluation point was set to be increased in the case of improvement in lubricity, and the evaluation point was set to be decreased in the case of decrease in lubricity. The evaluation points were given within a range of from 1 to 10. A score of "0" was given when the evaluation point was from 1 to 3, a score of "1" was given when the evaluation point was from 4 to 6, and a score of "2" was given when the evaluation point was from 7 to 10.

### <Anti-lipid Adhesion Property Test>

The anti-lipid adhesion property of a contact lens (base material) was evaluated by the following procedure.

First, artificial lipid was performed by a method described below. Subsequently, after a contact lens (base material) that had been immersed in physiological saline overnight was immersed in 4 mL of the artificial lipid for 4 hours, the contact lens (base material) was lightly rinsed with physiological saline, and moisture was removed. Then, the appearance of the contact lens was observed with the naked eye and evaluated in accordance with the following criteria.

A score of "0" was given when the entire lens was observed to be white, a score of "1" was given when the lens was observed to be partially white, and a score of "2" was given when the lens was hardly observed to be white.

### Preparation of Artificial Lipid

1) 0.5 g of mixed lipid having the following composition is mixed into 100 mL of a phosphate-borate buffer described below.
2) The mixture is suspended at 60°C with a homomixer.
3) The resultant is adjusted to a pH of 7.0 with 1 N hydrochloric acid.

### Composition of Mixed Lipid

| | |
|---|---|
| Oleic acid | 0.06 g |
| Linolenic acid | 0.06 g |
| Palmitic acid | 0.06 g |
| Tripalmitic acid | 0.81 g |
| Cetyl alcohol | 0.20 g |
| Cetyl myristate | 0.81 g |
| Cholesterol | 0.08 g |
| Cholesterol palmitate | 0.08 g |
| Lecithin (derived from egg) | 2.83 g |

### Composition of Phosphate-Borate Buffer

| | |
|---|---|
| Sodium chloride | 2.25 g |
| Potassium dihydrogen phosphate | 1.25 g |
| Sodium tetraborate decahydrate | 5.65 g |
| Ion-exchanged water | Total amount is set to 250 mL |

Reference Kaoru Iwai; Mari Moriyama; Masaki Imayasu; Hidenari Tanaka: Lipid Adsorption to Contact Lens Materials., Journal of Japan Contact Lens Society, 1995, 37(1), 58-61.

### <Production of Contact Lens including Hydrophilic Polymer containing 2-Aminoethyl Methacrylate and Contact Lens Base Material using Epoxy Group-containing Silicone Macromer and Evaluation of the Contact Lens>

### [Example 1-1]

The contact lens base material synthesized in Synthesis Example 3-1 was evaluated for the hydrophilicity, lubricity, and anti-lipid adhesion property on the surface of the contact lens base material. As a result, scores of "1", "0", and "1" were given for the WBUT, the lubricity, and the anti-lipid adhesion property, respectively.

The hydrophilic polymer containing 2-aminoethyl methacrylate prepared in Synthesis Example 1-1 was dissolved in water to produce a 1% hydrophilic polymer solution.

The contact lens base material synthesized in Synthesis Example 3-1 and 5.00 g of the produced hydrophilic polymer solution were placed in a glass vial, and 0.03 g of sodium hydroxide (NaOH) was added thereto as a catalyst. The glass vial was capped, and autoclave treatment was performed at 121°C for 20 minutes. Thus, a contact lens was produced.

After the autoclave treatment, the contact lens was taken out and washed with 10 g of physiological saline. Subsequently, the washed contact lens was placed in a glass vial, and 10 g of physiological saline was added thereto. After the glass vial was sealed, autoclave treatment was performed at 121°C for 20 minutes. Thus, a contact lens in which the contact lens base material was coated with the hydrophilic polymer via a covalent bond of the formula (A-1) or (A-2) was obtained.

The resultant contact lens was evaluated for the hydrophilicity, lubricity, and anti-lipid adhesion property on the surface of the contact lens. As a result, scores of "2", "1", and "2" were given for the WBUT, the lubricity, and the anti-lipid adhesion property, respectively.

The evaluations of the contact lens of Example 1-1 are shown in Table 3.

### <Production of Contact Lens including Hydrophilic Polymer containing Methacrylic Acid and Contact Lens Base Material using Epoxy Group-containing Silicone Macromer and Evaluation of the Contact Lens>

### [Example 1-2]

The contact lens base material synthesized in Synthesis Example 3-2 was evaluated for the hydrophilicity, lubricity, and anti-lipid adhesion property on the surface of the contact lens base material. As a result, scores of "1", "1", and "1" were given for the WBUT, the lubricity, and the anti-lipid adhesion property, respectively.

The hydrophilic polymer containing methacrylic acid prepared in Synthesis Example 1-2 was dissolved in water to produce a 1% hydrophilic polymer solution.

The contact lens base material synthesized in Synthesis Example 3-2 and 5.00 g of the produced hydrophilic polymer solution were placed in a glass vial. The glass vial was capped, and autoclave treatment was performed at 121°C for 20 minutes. Thus, a contact lens was produced.

After the autoclave treatment, the contact lens was taken out and washed with 10 g of physiological saline. Subsequently, the washed contact lens was placed in a glass vial, and 10 g of physiological saline was added thereto. After the glass vial was sealed, autoclave treatment was performed at 121°C for 20 minutes. Thus, a contact lens in which the contact lens base material was coated with the hydrophilic polymer via a covalent bond of the formula (B-1) or (B-2) was obtained.

The resultant contact lens was evaluated for the hydrophilicity, lubricity, and anti-lipid adhesion property on the surface of the contact lens. As a result, scores of "2", "2", and "2" were given for the WBUT, the lubricity, and the anti-lipid adhesion property, respectively.

The evaluations of the contact lens of Example 1-2 are shown in Table 3.

### <Production of Contact Lenses including Hydrophilic Polymer containing 2-Aminoethyl Methacrylate or Methacrylic Acid and Various Contact Lens Base Materials each using Epoxy Group-containing Silicone Macromer and Evaluation of the Contact Lenses>

### [Examples 1-3 to 1-9]

Contact lenses of Examples 1-3 to 1-9 were each produced by combining the hydrophilic polymer prepared in Synthesis Example 1-1 or 1-2 and any of the contact lens base materials synthesized in Synthesis Examples 3-3 to 3-8 by the same method as in Example 1-1 or 1-2.

The contact lens base material synthesized in each of the Synthesis Examples is evaluated for the hydrophilicity, lubricity, and anti-lipid adhesion property on the surface of the contact lens base material as described below.

### Synthesis Example: WBUT·Lubricity·Anti-lipid adhesion property

Synthesis Example 3-3: 1·0·1
Synthesis Example 3-4: 1·1·1
Synthesis Example 3-5: 1·1·0
Synthesis Example 3-6: 1·0·0
Synthesis Example 3-7: 1·0·0
Synthesis Example 3-8: 1·0·0

The evaluations of the contact lenses of Examples 1-3 to 1-9 are shown in Table 3.

### <Production of Contact Lens including Polymer Free of Reactive Monomer and Contact Lens Base Material using Epoxy Group-containing Silicone Macromer and Evaluation of the Contact Lens>

### [Comparative Example 1]

The contact lens base material synthesized in Synthesis Example 3-1 was evaluated for the hydrophilicity, lubricity, and anti-lipid adhesion property on the surface of the contact lens base material. As a result, scores of "1", "0", and "1" were given for the WBUT, the lubricity, and the anti-lipid adhesion property, respectively.

The polymer free of a reactive monomer prepared in Synthesis Example 1-3 was dissolved in water to produce a 1% polymer solution.

The contact lens base material synthesized in Synthesis Example 3-1 and 5.00 g of the produced polymer solution were placed in a glass vial, and 0.03 g of sodium hydroxide (NaOH) was added thereto as a catalyst. The glass vial was capped, and autoclave treatment was performed at 121°C for 20 minutes. Thus, a contact lens was produced.

After the autoclave treatment, the contact lens was taken out and washed with 10 g of physiological saline. Subsequently, the washed contact lens was placed in a glass vial, and 10 g of physiological saline was added thereto. After the glass vial was sealed, autoclave treatment was performed at 121°C for 20 minutes. Thus, a contact lens was produced.

The resultant contact lens was evaluated for the hydrophilicity, lubricity, and anti-lipid adhesion property on the surface of the contact lens. As a result, scores of "1", "0", and "1" were given for the WBUT, the lubricity, and the anti-lipid adhesion property, respectively.

The evaluations of the contact lens of Comparative Example 1 are shown in Table 3.

### <Production of Contact Lens including Hydrophilic Polymer containing 2-Aminoethyl Methacrylate and Contact Lens Base Material using Silicone Macromer free of Epoxy Group and Evaluation of the Contact Lens>

### [Comparative Example 2]

The contact lens base material synthesized in Synthesis Example 3-10 was evaluated for the hydrophilicity, lubricity, and anti-lipid adhesion property on the surface of the contact lens base material. As a result, scores of "0", "0", and "0" were given for the WBUT, the lubricity, and the anti-lipid adhesion property, respectively.

The hydrophilic polymer containing 2-aminoethyl methacrylate prepared in Synthesis Example 1-1 was dissolved in water to produce a 1% hydrophilic polymer solution.

The contact lens base material synthesized in Synthesis Example 3-10 and 5.00 g of the produced hydrophilic polymer solution were placed in a glass vial, and 0.03 g of sodium hydroxide (NaOH) was added thereto as a catalyst. The glass vial was capped, and autoclave treatment was performed at 121°C for 20 minutes. Thus, a contact lens was produced.

After the autoclave treatment, the contact lens was taken out and washed with 10 g of physiological saline. Subsequently, the washed contact lens was placed in a glass vial, and 10 g of physiological saline was added thereto. After the glass vial was sealed, autoclave treatment was performed at 121°C for 20 minutes. Thus, a contact lens was produced.

The resultant contact lens was evaluated for the hydrophilicity, lubricity, and anti-lipid adhesion property on the surface of the contact lens. As a result, scores of "0", "0", and "0" were given for the WBUT, the lubricity, and the anti-lipid adhesion property, respectively.

The evaluations of the contact lens of Comparative Example 2 are shown in Table 3.

### <Production of Contact Lens including Hydrophilic Polymer containing Methacrylic Acid and Contact Lens Base Material using Silicone Macromer free of Epoxy Group and Evaluation of the Contact Lens>

### [Comparative Example 3]

The contact lens base material synthesized in Synthesis Example 3-11 was evaluated for the hydrophilicity, lubricity, and anti-lipid adhesion property on the surface of the contact lens base material. As a result, scores of "0", "0", and "0" were given for the WBUT, the lubricity, and the anti-lipid adhesion property, respectively.

The hydrophilic polymer containing methacrylic acid prepared in Synthesis Example 1-2 was dissolved in water to produce a 1% hydrophilic polymer solution.

The contact lens base material synthesized in Synthesis Example 3-11 and 5.00 g of the produced hydrophilic polymer solution were placed in a glass vial. The glass vial was capped, and autoclave treatment was performed at 121°C for 20 minutes. Thus, a contact lens was produced.

After the autoclave treatment, the contact lens was taken out and washed with 10 g of physiological saline. Subsequently, the washed contact lens was placed in a glass vial, and 10 g of physiological saline was added thereto. After the glass vial was sealed, autoclave treatment was performed at 121°C for 20 minutes. Thus, a contact lens was produced.

The resultant contact lens was evaluated for the hydrophilicity, lubricity, and anti-lipid adhesion property on the surface of the contact lens. As a result, scores of "0", "0", and "0" were given for the WBUT, the lubricity, and the anti-lipid adhesion property, respectively.

The evaluations of the contact lens of Comparative Example 3 are shown in Table 3.

In each of the contact lenses produced in Examples 1-1 to 1-9, any of the scores of the evaluation items of the WBUT, the lubricity, and the anti-lipid adhesion property was improved as compared to those of the contact lens base material used for its production. In each of the contact lenses produced in Examples 1-1 to 1-9, the score of "1" or "2" was given for each of the WBUT, the lubricity, and the anti-lipid adhesion property. Thus, it was shown that the contact lens in which the contact lens base material including an epoxy group-containing silicone macromer was coated with the hydrophilic polymer containing 2-aminoethyl methacrylate or methacrylic acid via a covalent bond has excellent hydrophilicity, excellent lubricity, and an excellent anti-lipid adhesion property.

In each of the contact lenses produced in Comparative Examples 1 to 3, the scores of the evaluation items of WBUT, lubricity, and anti-lipid adhesion property were not improved as compared to those of the contact lens base material used for its production, and the score of "0" or "1" was given for each of the WBUT, the lubricity, and the anti-lipid adhesion property. Thus, excellent hydrophilicity, excellent lubricity, and an excellent anti-lipid adhesion property were not simultaneously exhibited.

As described above, the contact lens of the present disclosure simultaneously has hydrophilicity, lubricity, and an anti-lipid adhesion property.

**Table 1-1**

| | Epoxy group-containing silicone macromer | | | | |
|---|---|---|---|---|---|
| | Synthesis Example 2-1 | Synthesis Example 2-2 | Synthesis Example 2-3 | Synthesis Example 2-4 | Synthesis Example 2-5 |
| Formula (1) "a" | 35 | 34 | 32 | 32 | 73 |
| Formula (1) "b" | 1 | 3 | 6 | 6 | 5 |
| Formula (1) R¹ | -CH₃ | -CH₃ | -CH₃ | -CH₃ | -CH₃ |
| Formula (1) R² | -CH₃ | -CH₃ | -CH₃ | -CH₃ | -CH₃ |
| Formula (1) R³ | -CH₂CH₂CH₂- | -CH₂CH₂CH₂- | -CH₂CH₂CH₂- | -CH₂CH₂CH₂- | -CH₂CH₂CH₂- |
| Formula (1) R⁴ | -CH₂CH₂CH₂- | -CH₂CH₂CH₂- | -CH₂CH₂CH₂- | -CH₂CH₂CH₂- | -CH₂CH₂CH₂- |
| Formula (1) X⁰ | Formula (2) | Formula (2) | Formula (2) | Formula (2) | Formula (2) |
| Formula (2) R⁷ | -CH₂CH₂CH₂-O-CH₂- | -CH₂CH₂CH₂-O-CH₂- | -CH₂CH₂CH₂-O-CH₂- | -CH₂CH₂CH₂CH₂- | -CH₂CH₂CH₂-O-CH₂- |
| Formula (2) R⁸ | -H | -H | -H | -H | -H |

**Table 1-2**

| | Epoxy group-containing silicone macromer | | | Silicone macromer free of epoxy group |
|---|---|---|---|---|
| | Synthesis Example 2-6 | Synthesis Example 2-7 | Synthesis Example 2-8 | Synthesis Example 2-9 |
| Formula (1) "a" | 92 | 141 | 275 | 36 |
| Formula (1) "b" | 13 | 19 | 69 | 0 |
| Formula (1) R¹ | -CH₃ | -CH₃ | -CH₃ | -CH₃ |
| Formula (1) R² | -CH₃ | -CH₃ | -CH₃ | -CH₃ |
| Formula (1) R³ | -CH₂CH₂CH₂- | -CH₂CH₂CH₂- | -CH₂CH₂CH₂- | -CH₂CH₂CH₂- |
| Formula (1) R⁴ | -CH₂CH₂CH₂- | -CH₂CH₂CH₂- | -CH₂CH₂CH₂- | -CH₂CH₂CH₂- |
| Formula (1) X⁰ | Formula (2) | Formula (2) | Formula (2) | |
| Formula (2) R⁷ | -CH₂CH₂CH₂-O-CH₂- | -CH₂CH₂CH₂CH₂- | -CH₂CH₂CH₂-O-CH₂- | |
| Formula (2) R⁸ | -H | -H | -H | |

**Table 2-1**

| | | Raw material | Synthesi s Example 3-1 | Synthesi s Example 3-2 | Synthesi s Example 3-3 | Synthesi s Example 3-4 | Synthesi s Example 3-5 | Synthesi s Example 3-6 |
|---|---|---|---|---|---|---|---|---|
| | | | Mixing ratio | Mixing ratio | Mixing ratio | Mixing ratio | Mixing ratio | Mixing ratio |
| Epoxy group-containing silicone macromer | Part(s ) by mass | Synthesis Example 2-1 | 30.00 | | | | | |
| | | Synthesis Example 2-2 | | 30.00 | | | | |
| | | Synthesis Example 2-3 | | | 30.00 | | | |
| | | Synthesis Example 2-4 | | | | 30.00 | | |
| | | Synthesis Example 2-5 | | | | | 30.00 | |
| | | Synthesis Example 2-6 | | | | | | 20.00 |
| | | Synthesis Example 2-7 | | | | | | |
| | | Synthesis Example 2-8 | | | | | | |
| Silicone macromer free of epoxy group | | Synthesis Example 2-9 | | | | | | |
| | | X-22-164AS | | | | | | |
| (I) Silicone-containing vinyl monomer | | SIGMA | 20.00 | 20.00 | 20.00 | 20.00 | 20.00 | 30.00 |
| (III) Non-silicone vinyl crosslinking agent | | TEGDMA | 1.00 | 1.00 | 1.00 | 1.00 | 1.00 | 1.00 |
| (IV) Hydrophilic vinyl monomer | | HEMA | 10.00 | 10.00 | 10.00 | 10.00 | 10.00 | 10.00 |
| | | NVP | 39.00 | 39.00 | 39.00 | 39.00 | 39.00 | 39.00 |
| Total of polymerizab le composition | | - | 100.00 | 100.00 | 100.00 | 100.00 | 100.00 | 100.00 |
| Solvent | | HeOH | 30.00 | 30.00 | 30.00 | 30.00 | 30.00 | 40.00 |
| Initiator | | 1-819 | 2.00 | 2.00 | 2.00 | 2.00 | 2.00 | 2.00 |
| Evaluation | | Uniformity of compositio n | + | + | + | + | + | + |
| Polymerization condition | | | 405 nm, 1.5 mW/cm² | 405 nm, 1.5 mW/cm² | 405 nm, 1.5 mW/cm² | 405 nm, 1.5 mW/cm² | 405 nm, 1.5 mW/cm² | 405 nm, 1.5 mW/cm² |
| | | | 30 min | 30 min | 30 min | 30 min | 30 min | 30 min |

**Table 2-2**

| | | Raw material | Synthesi s Example 3-7 | Synthesi s Example 3-8 | Synthesis Example 3-9 | Synthesi s Example 3-10 | Synthesi s Example 3-11 |
|---|---|---|---|---|---|---|---|
| | | | Mixing ratio | Mixing ratio | Mixing ratio | Mixing ratio | Mixing ratio |
| Epoxy group-containing silicone macromer | Part(s ) by mass | Synthesis Example 2-1 | | | | | |
| | | Synthesis Example 2-2 | | | | | |
| | | Synthesis Example 2-3 | | | | | |
| | | Synthesis Example 2-4 | | | | | |
| | | Synthesis Example 2-5 | | | | | |
| | | Synthesis Example 2-6 | | | | | |
| | | Synthesis Example 2-7 | 10.00 | | | | |
| | | Synthesis | | 10.00 | | | |
| | | Example 2-8 | | | | | |
| Silicone macromer free of epoxy group | | Synthesis Example 2-9 | | | 30.00 | 10.00 | |
| | | X-22-164AS | | | | | 30.00 |
| (I) Silicone-containing vinyl monomer | | SIGMA | 30.00 | 30.00 | 20.00 | 30.00 | 20.00 |
| (III) Non-silicone vinyl crosslinking agent | | TEGDMA | 1.00 | 1.00 | 1.00 | 1.00 | 1.00 |
| (IV) Hydrophilic vinyl monomer | | HEMA | 20.00 | 20.00 | 10.00 | 20.00 | 10.00 |
| | | NVP | 39.00 | 39.00 | 39.00 | 39.00 | 39.00 |
| Total of polymerizabl e composition | | - | 100.00 | 100.00 | 100.00 | 100.00 | 100.00 |
| Solvent | | HeOH | 40.00 | 40.00 | 40.00 | 40.00 | 30.00 |
| Initiator | | I-819 | 2.00 | 2.00 | 2.00 | 2.00 | 2.00 |
| Evaluation | | Uniformity of compositio n | + | + | - | + | + |
| Polymerization condition | | | 405 nm, 1.5 | 405 nm, 1.5 | Composition was not | 405 nm, 1.5 | 405 nm, 1.5 |
| | | | mW/cm² 30 min | mW/cm² 30 min | uniformly dissolved, and hence polymerizatio n was not performed | mW/cm² 30 min | mW/cm² 30 min |

**Table 3-1**

| | | | Example 1-1 | Example 1-2 | Example 1-3 | Example 1-4 | Example 1-5 | Example 1-6 |
|---|---|---|---|---|---|---|---|---|
| Hy dr op hi li c po ly me r | Synthesis Example | | Synthesi s Example 1-1 | Synthesis Example 1-2 | Synthesis Example 1-1 | Synthesis Example 1-2 | Synthesis Example 1-1 | Synthesis Example 1-1 |
| | Reactive monomer | | 2-Aminoeth yl methacry late | Methacryl ic acid | 2-Aminoethyl methacrylat e | Methacrylic acid | 2-Aminoethyl methacrylat e | 2-Aminoethyl methacrylat e |
| | Molar ratio of reactive monomer [%] | | 9 | 10 | 9 | 10 | 9 | 9 |
| Co nt ac t le ns ba se ma te ri al | Synthesis Example | | Synthesi s Example 3-1 | Synthesis Example 3-2 | Synthesis Example 3-3 | Synthesis Example 3-3 | Synthesis Example 3-4 | Synthesis Example 3-5 |
| | Epoxy group-containing silicone macromer | | Included | Included | Included | Included | Included | Included |
| | Evalu ation | WBUT | 1 | 1 | 1 | 1 | 1 | 1 |
| | | Lubri city | 0 | 1 | 0 | 0 | 1 | 1 |
| | | Anti-lipid adhes | 1 | 1 | 1 | 1 | 1 | 0 |
| | | ion prope rty | | | | | | |
| Pr od uc ti on of co nt ac t le ns | Treatment condition | | 121°C, 20 min | 121°C, 20 min | 121°C, 20 min | 121°C, 20 min | 121°C, 20 min | 121°C, 20 min |
| | (Hydr ophil ic) polym er solut ion | Kind of solut ion | Water | Water | Water | Water | Water | Water |
| | | Conce ntrat ion [%] | 1.00 | 1.00 | 1.00 | 1.00 | 1.00 | 1.00 |
| | | Mass (g)/l ens base mater ial | 5.00 | 5.00 | 5.00 | 5.00 | 5.00 | 5.00 |
| | | Added catal yst | NaOH (0.03[g] ) | Absent | NaOH (0.03 [g]) | Absent | NaOH (0.03 [g]) | NaOH (0.03 [g]) |
| Co nt ac t le ns | Kind of covalent bond | | (A-1) (A-2) | (B-1) (B-2) | (A-1) (A-2) | (B-1) (B-2) | (A-1) (A-2) | (A-1) (A-2) |
| | Evalu ation | WBUT | 2 | 2 | 2 | 2 | 2 | 2 |
| | | Lubri city | 1 | 2 | 2 | 2 | 2 | 2 |
| | | Anti-lipid adhes ion | 2 | 2 | 2 | 2 | 2 | 1 |
| | | prope rty | | | | | | |

**Table 3-2**

| | | | Example 1-7 | Example 1-8 | Example 1-9 | Comparative Example 1 | Comparative Example 2 | Comparative Example 3 |
|---|---|---|---|---|---|---|---|---|
| Hydr ophi lic poly mer | Synthesis Example | | Synthes is Example 1-1 | Synthesis Example 1-2 | Synthesis Example 1-1 | Synthesis Example 1-3 | Synthesis Example 1-1 | Synthesis Example 1-2 |
| | Reactive monomer | | 2-Aminoet hyl methacr ylate | Methacryl ic acid | 2-Aminoethyl methacryl ate | Absent | 2-Aminoethyl methacrylate | Methacrylic acid |
| | Molar ratio of reactive monomer [%] | | 9 | 10 | 9 | 0 | 9 | 10 |
| Cont act lens base mate rial | Synthesis Example | | Synthes is Example 3-6 | Synthesis Example 3-7 | Synthesis Example 3-8 | Synthesis Example 3-1 | Synthesis Example 3-10 | Synthesis Example 3-11 |
| | Epoxy group-containing silicone macromer | | Include d | Included | Included | Included | Absent | Absent |
| | Evalu | WBUT | 1 | 1 | 1 | 1 | 0 | 0 |
| | ation | Lubr icit y | 0 | 0 | 0 | 0 | 0 | 0 |
| | | Anti lipi d adhe sion prop erty | 0 | 0 | 0 | 1 | 0 | 0 |
| Prod ucti on of cont act lens | Treatment condition | | 121°C, 20 min | 121°C, 20 min | 121°C, 20 min | 121°C, 20 min | 121°C, 20 min | 121°C, 20 min |
| | (Hydr ophil ic) polym er solut ion | Kind of solu tion | Water | Water | Water | Water | Water | Water |
| | | Conc entr atio n [%] | 1.00 | 1.00 | 1.00 | 1.00 | 1.00 | 1.00 |
| | | Mass (g)/ lens base mate rial | 5.00 | 5.00 | 5.00 | 5.00 | 5.00 | 5.00 |
| | | Adde d cata lyst | NaOH (0.03[g ]) | Absent | NaOH (0.03 [g]) | NaOH (0.03 [g]) | NaOH (0.03 [g]) | Absent |
| Cont | Kind of covalent bond | | (A-1) (A-2) | (B-1) (B-2) | (A-1) (A-2) | Absent | Absent | Absent |
| | Evalu ation | WBUT | 2 | 2 | 2 | 1 | 0 | 0 |
| | | Lubr icit y | 1 | 1 | 1 | 0 | 0 | 0 |
| | | Anti lipi d adhe sion prop erty | 1 | 1 | 1 | 1 | 0 | 0 |

### Industrial Applicability

The present disclosure can provide the contact lens having hydrophilicity, lubricity, and an anti-lipid adhesion property.

## Claims

1. A contact lens, comprising:
a hydrophilic polymer; and
a contact lens base material,
wherein the hydrophilic polymer is a polymer containing a constituent monomer based on at least one kind of 2-aminoethyl methacrylate or methacrylic acid,
wherein the contact lens base material is a base material including an epoxy group-containing silicone macromer represented by the following formula (1) in a composition thereof, and
wherein the hydrophilic polymer and the contact lens base material are bonded to each other via at least one covalent bond selected from the group consisting of the following formulae (A-1) to (B-2): 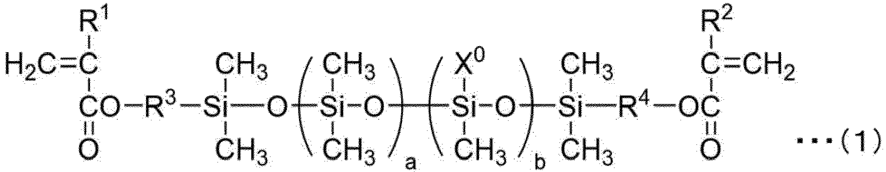
where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 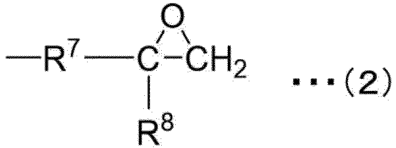
where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 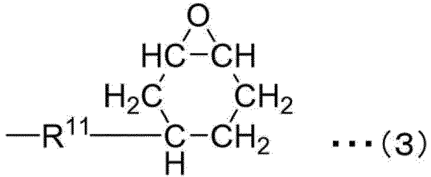
where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms.

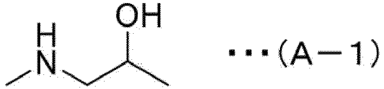

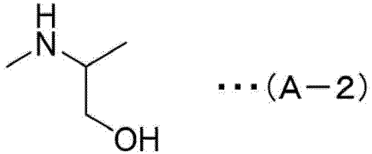

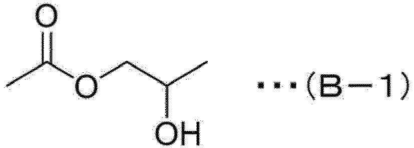

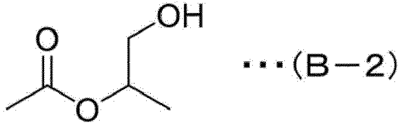

2. A method of producing a contact lens, comprising a step of bringing a hydrophilic polymer and a contact lens base material into contact with each other,
wherein the hydrophilic polymer is a polymer containing a constituent monomer based on at least one kind of 2-aminoethyl methacrylate or methacrylic acid,
wherein the contact lens base material is a base material including an epoxy group-containing silicone macromer represented by the following formula (1) in a composition thereof, and
wherein at least one covalent bond selected from the group consisting of the following formulae (A-1) to (B-2) is formed in the step: 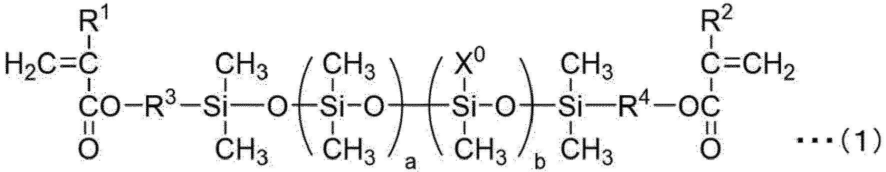
where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 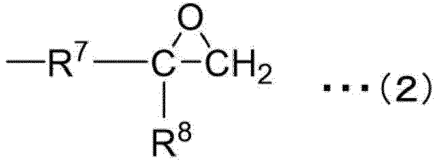
where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 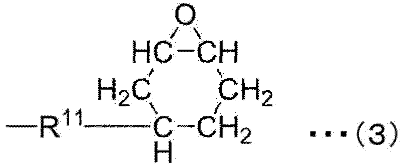
where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms.

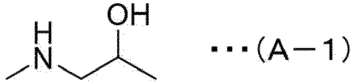

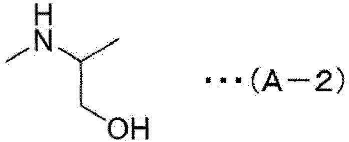

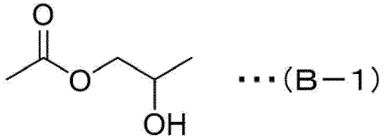

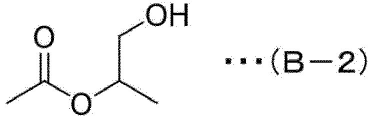

3. The contact lens according to claim 1, wherein the hydrophilic polymer is a copolymer further containing a constituent monomer based on a monomer represented by the following formula (4): 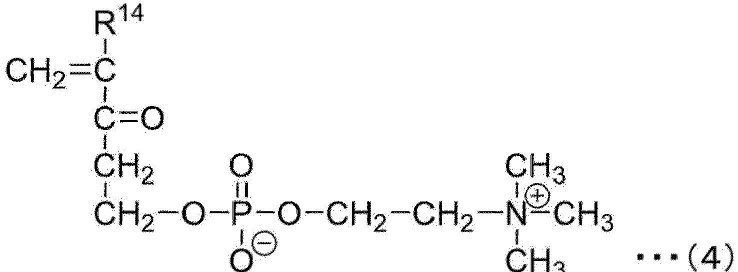 where R¹⁴ represents a hydrogen atom or a methyl group.

4. The method of producing a contact lens according to claim 2, wherein the hydrophilic polymer is a copolymer further containing a constituent monomer based on a monomer represented by the following formula (4): 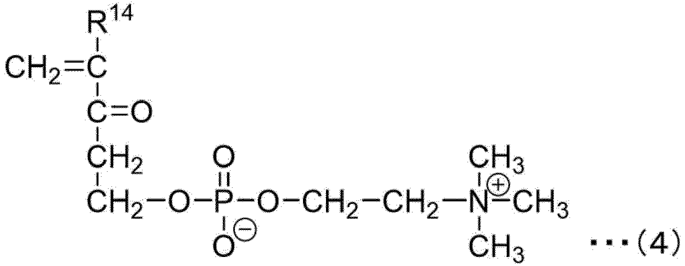 where R¹⁴ represents a hydrogen atom or a methyl group.

5. A contact lens base material, comprising an epoxy group-containing silicone macromer represented by the following formula (1) in a composition thereof: 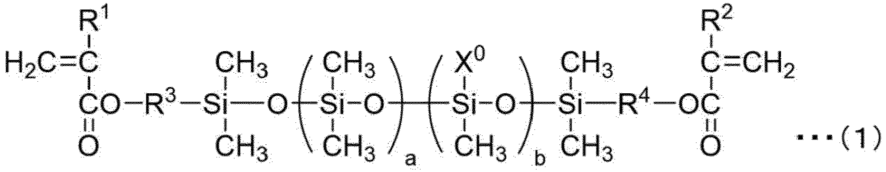
where "a" represents an integer of from 10 to 500, "b" represents an integer of from 1 to 100, R¹ and R² each independently represent a hydrogen atom or a methyl group, R³ and R⁴ each independently represent an alkylene divalent group having 2 to 6 carbon atoms or a divalent group of -R⁵-O-R⁶-, where R⁵ and R⁶ each independently represent an alkylene divalent group having 2 to 6 carbon atoms, and X° is represented by the following formula (2) or (3); 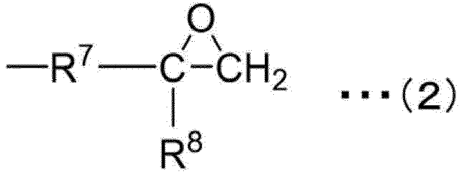
where R⁷ represents an alkylene divalent group having 2 to 8 carbon atoms or a divalent group of -R⁹-O-R¹⁰-, where R⁹ and R¹⁰ each independently represent an alkylene divalent group having 1 to 6 carbon atoms, and R⁸ represents a hydrogen atom or a methyl group; 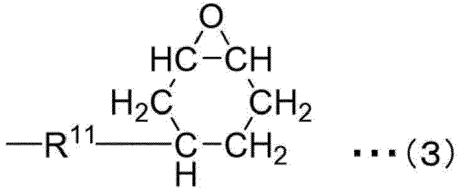
where R¹¹ represents an alkylene divalent group having 2 to 8 carbon atoms or a divalent group of -R¹²-O-R¹³-, where R¹² and R¹³ each independently represent an alkylene divalent group having 1 to 6 carbon atoms.
